# EUROPEAN PATENT SPECIFICATION

(11) **EP 2 566 103 B1**
(45) Date of publication and mention of the grant of the patent: **02.08.2017**
(21) Application number: 11306073.5
(22) Date of filing: 29.08.2011
(51) Int. Cl.: H04L 12/24

(54) **Apparatus and method for correlating faults in an information carrying network**
Vorrichtung und Verfahren zur Korrelation von Störungen in einem Informationsträgernetzwerk
Appareil et procédé pour mettre en corrélation des défauts dans un réseau de transport d'informations

(43) Date of publication of application: 06.03.2013
(73) Proprietor: ALCATEL LUCENT, 92100 Boulogne-Billancourt (FR)
(72) Inventor: Hug, Werner, 8635 Dürnten (CH)
(74) Representative: Menzietti, Domenico

(56) References cited:
- US-A1- 2002 111 755
- US-A1- 2008 114 581
- US-A1- 2010 223 628
- GARDNER R D ET AL: "Methods and systems for alarm correlation", GLOBAL TELECOMMUNICATIONS CONFERENCE, 1996. GLOBECOM '96. 'COMMUNICATI ONS: THE KEY TO GLOBAL PROSPERITY LONDON, UK 18-22 NOV. 1996, NEW YORK, NY, USA,IEEE, US, vol. 1, 18 November 1996 (1996-11-18), pages 136-140, XP010220339, DOI: 10.1109/GLOCOM.1996.594348 ISBN: 978-0-7803-3336-9
- Gabriel Jakobson ET AL: "Alarm Correlation", IEEE Network, 1 November 1993 (1993-11-01), XP55018638, Retrieved from the Internet: URL:http://www.macs.hw.ac.uk/~dwcorne/RSR/ eventcorr.pdf [retrieved on 2012-02-07]
- MR FRANK COENNING WANDEL & GOLTERMANN GERMANY: "REPORT OF THE WORKING PARTY 2/4 (Performance and Test Equipment) PART II.A - PRELIMINARY DRAFT AND REVISED RECOMMENDATIONS;R 10", ITU-T DRAFTS ; STUDY PERIOD 1997-2000, INTERNATIONAL TELECOMMUNICATION UNION, GENEVA ; CH, vol. Study Group 4 ; 9/4, 11/4, 1 November 1997 (1997-11-01), pages 1-41, XP017477075, [retrieved on 2003-08-21]

## Description

### Field of Invention

Embodiments generally relate to an apparatus and a method for correlating faults in an information carrying network, which may be based on a wireless or a cable-bound communication technology or a combination thereof. More specifically, embodiments may relate to apparatuses and methods for providing information on a possible root cause triggering at least one fault event signal.

### Background

Information carrying networks, such as computer networks, for instance, located in data processing centers, distributed network systems in, for instance, telecommunication environments, but also other information carrying networks, strongly demand an efficient and, preferably, highly automated fault or error management. A single root fault or root cause in such complex communication system might cause a huge number of symptomatic or consequential error messages and side effects to occur. Often, it is very hard to identify the root cause or root causes triggering the symptoms.

As more and more transmission-critical business users relying on a secure and reliable communication are involved today, a need exists to increase an uptime of services provided by such a network. In many networks an uptime of more than 99.9% of services may be desirable. To be able to provide uninterrupted services to these users, and to reduce the loss of service, fault management becomes a critical design issue if interruption is inevitable and, hence, ought to be considered. Thus, reliability and survivability must be considered in designing these networks to provide uninterrupted continuous services to users in the presence of node or link failures. Failures can be induced in such a system via wide spread of causes including, for instance, electrical or electronic break-downs of network components, software-related causes and physical damages inflicted on the system or its parts.

A fault management system may be, therefore, integrated into an information carrying network realizing an Integrated Fault Management (IFM) system. Such a system may provide information to an incident management entity which components or to a service management entity which network services may be affected, hopefully leading to a reduced maintenance time and, as a consequence, to a higher up-time. However, the isolation of a root cause leading to the huge amount of fault signals is typically a complex challenge.

In current implementations, critical events are often displayed in Element Management Systems (EMS) or Network Management Systems (NMS) minutes before they are displayed in the IFM system. Events are collected in a central database, which are then normalized, analyzed, de-duplicated, filtered and categorized. The remaining events are processed by customized rule sets and hopefully a root cause is found.

Current implementations often provide a sufficient solution as long as "simple" network infrastructures are monitored. IP-based (Internet Protocol) network infrastructures can at least be discovered and monitored fairly easily with a conventional system as long as the IP-based network elements are physically connected by copper or fiber. When routers and/or switches are directly connected with a fiber or copper cable, failures can be seen by the routers or switches at both ends of the connection.

If, however, IP-based network elements are connected by network services like Ethernet over Synchronous Digital Hierarchy (SDH), which is also referred to as EoS or EoSDH, a link disruption in the data plane, where all information is transported, may not be seen or noticed. Synchronous optical networking (SONET) and synchronous digital hierarchy (SDH) are standardized multiplexing protocols that transfer multiple digital bit streams over optical fiber using, for instance, lasers or light-emitting diodes (LEDs).

The interfaces between router/switch and Multiservice Node (MSN) are up and running while the network service itself is interrupted within the network infrastructure. In such a case fault correlation (in the IP-based part) has to rely on information issued by the control plane (e.g. router adjacency down). The root cause analysis (of the IP-based part) may provide an indication that a link is down. However, most likely this information will have a low severity as typically re-routing will prevent this fault from becoming service affecting.

Depending on the sophistication of a root cause analysis in such a MSN-based network infrastructure, a root cause is found and displayed in the IFM. Nevertheless, the results of the root cause analysis in the IP and MSN part are decoupled. Human intervention is required to relate the root causes determined in the IP and MSN part.

Interestingly enough, a similar situation exists when the MSN-based network has to rely on complex links, i.e. links with cipher or microwave equipment. In such an environment, the root cause analysis of the MSN part may locate a link down, but not its root cause.

Furthermore, current implementations typically rely on a set of customized rule files. A rule file may provide a means to relate events to each other and to determine the root cause. The quality of such a root cause analysis is, however, directly related to the skills of the implementers. Rule files are usually created by observing the behavior of the monitored network infrastructure. Events are logged and the implementer tries to understand how the events relate to each other. During the lifetime of the system many events are issued by the network infrastructure that were not observed during the period of the rule file establishment. This may lead to considerable work after the IFM has been commissioned. Operational experience indicates that an expected productivity gain may eventually not be realized. This can often be attributed to poor correlation results in the IFM.

Event formats and content are not strictly standardized. This results in different events for the same cause (e.g. SFP not working) in network elements from different vendors. Multivendor network infrastructures, even for the same network level, are common. That leads to duplication and of the work and sometimes to a different result of the root cause analysis Document D1 US 2010/0223628 A1 discloses a method for correlating service and network management events, enabling a user to correlate all the application and network events that stem from a common fault.

### Summary

An embodiment of an apparatus for correlating faults in an information carrying network comprising a plurality of interconnected physical network elements comprises a database comprising a multidimensional image of the information carrying network. The multidimensional image comprises a plurality of interconnected image elements, the group of image elements comprising containers, physical interface components of the physical network elements and physical core components of the physical network elements, wherein the group of containers comprises edge components and node components. An edge component is indicative of at least two physical interface components of at least one physical network element and a link between the at least two physical interface components. A node component is indicative of at least a physical component directly coupled to a physical interface component of a physical network element, and the multidimensional image further comprises for at least some image elements of the multidimensional image information on hierarchy levels supported by the respective image elements, wherein the physical interface components comprise the hierarchy levels Ethernet, Fiber / Copper and Infrastructure. The apparatus further comprises a data processor adapted to receive at least one fault event signal and to assign the at least one fault event signal to a container and a hierarchy level associated with an image element as defined in the multidimensional image of the information carrying network. The apparatus further comprises an evaluator adapted to evaluate the at least one assigned fault event signal by correlating information on the containers and the hierarchy level of the at least one assigned fault event signal and to provide an evaluation signal indicative of a possible correlation of the at least one assigned fault event signal based on the evaluation.

An embodiment of a method for correlating faults in an information carrying network comprising a plurality of interconnected physical network elements comprises providing a multidimensional image of the information carrying network, the multidimensional image comprising a plurality of interconnected image elements, the group of image elements comprising containers, physical interface components of the physical network elements and physical core components of the physical network elements. The group of containers comprises edge components and node components, wherein an edge component is indicative of at least two physical interface components of at least one physical network element and a link between the at least two physical interface components. A node component is indicative of at least a physical component directly coupled to a physical interface component of a physical network element. The multidimensional image further comprises for at least some image elements of the multidimensional image information on hierarchy levels supported by the respective image elements, wherein the physical interface components comprise the hierarchy levels Ethernet, Fiber / Copper and Infrastructure. The method further comprises receiving at least one fault event signal and assigning the at least one fault event signal to a container and a hierarchy level associated with an image element as defined in the multidimensional image of the information carrying network. The method further comprises evaluating the at least one assigned fault event signal by correlating information on the containers and the hierarchy level of the at least one assigned fault event signal, and providing an evaluation signal indicative of a possible correlation of the at least one assigned fault event signal based on the evaluation.

Embodiments of the present invention may be based on the finding that correlating faults in an information carrying network may be improved by employing a multidimensional image of the information carrying network based on image elements to which a fault event signal is assigned. To facilitate this, the multidimensional image comprises information on the hierarchy levels supported by the respective image elements. Based on the information comprised in the fault event signal, it is assigned to a container and a corresponding hierarchy level.

Depending on the implementation of the apparatus according to an embodiment, a container may be associated with one hierarchy level at most, or with an - in principle - arbitrary number of hierarchy levels (including the possibility of no hierarchy level). In the first case, the hierarchy level associated with a container may be considered to be a "part" of the container. In this case, a core or interface component associated with one container may equally well be associated with another container, to which a different hierarchy level is associated. In the second case, however, the container "merely" groups core and/or interface components in such a way that the container comprises or is associated with information of the hierarchy levels of the interface and/or core components associated with the respective container.

The image element may be the container itself or an image element comprised in the container. The fault event signal may be assigned based on information comprised in the fault event signal. Alternatively or additionally, it may also be assigned based on the multidimensional image of the information carrying network or level assigning information comprised therein and associated with at least one image element. In other embodiments, the level assigning information may be associated with a plurality of image elements or even all physical core components and/or all physical interface components. By evaluating the assigned fault event signals by taking the information on the containers and the hierarchy levels into account, a correlation of the assigned fault signals can be improved. The multidimensional image is sometimes also referred to as "network model".

To achieve this, embodiments employ the mentioned multidimensional image, in which the topography of the information carrying network with its plurality of interconnected physical network elements is divided into physical core components and physical interface components, which in turn are then grouped into containers. While the edge components always comprise more than a single physical interface component, the node components may or may not coincide with a physical core component of a physical network element. The decomposition of the physical components into the node and edge components is based on a functional approach. A node component may, therefore, be physically integrated into more than one dye, more than one chip, more than one board, more than one board or even more than one system. However, it should be noted that a physical interface component may also comprise physical components from more than one dye, chip, module, board, component assembly or system. Different physical components, such as electrical or electronic components, of one board - to name just one example - may be allocated to different interface and/or core components based on their functional or logical allocation.

In yet other words, based on topology information comprising the types, whereabouts, (physical) connections and - optionally - further information on the physical network elements, first a decomposition of the physical network elements into core and interface components is performed. This may, for example, be based on a network level model comprising building blocks for the respective physical network elements. Then, based on this decomposition, node components and half-edge components are defined based, for instance, on their logical functions, protocols and their abilities to emit fault event signals. Then the edge components are defined comprising at least two half-edge components and a link. Since the half-edge components are based on physical interface components, each of the edge components is indicative of at least two physical interface components of at least one physical network element and a link between them. Then, if required, advisable, or suitable, (further) containers may be defined. The container - including the edge components and the node components - form the multidimensional image.

In an apparatus according to an embodiment, the evaluator may be adapted to provide the evaluation signal comprising an information on a possible root cause having triggered the at least one fault event signal. This may allow an even better analysis of the root cause, since the evaluation signal can comprise information concerning a preliminary evaluation of the root cause.

In such an apparatus according to an embodiment, the evaluator may be adapted to consider a first assigned fault event signal as less likely to indicate the root cause, when a second assigned fault event signal assigned to the same container with a lower hierarchy level exists. Alternatively or additionally, the evaluator may also be adapted to base the evaluation of a plurality of fault event signals assigned to a first and a second container on the second container, when the physical network elements comprised in the first container are also comprised in the second container. Each of these evaluation schemes is based on the characteristics of the underlying multidimensional image and may improve the accuracy of the root cause prediction, individually or together.

In an apparatus according to an embodiment, the database may further be adapted to comprise for at least one of the image elements (of the underlying physical communication or network elements) for at least one fault event signal probability information indicating a probability of indicating a root cause. The evaluator may further be adapted to base the evaluation on the probability information, when available. This may further improve the accuracy of the root cause prediction since in the multidimensional image of the information carrying network, information may be comprised indicating as to whether a specific fault event signal is likely to be a root cause or not. Therefore, an analysis of the fault event signals may eventually be improved. In other embodiments the accuracy may further be improved by including probability information for a plurality of image elements or even all physical core components and/or all physical interface components comprised in the multidimensional image. Alternatively or additionally, the accuracy may also be improved by including probability information for a plurality of or even all fault event signals issued by one physical network element, a plurality of physical network elements or all physical network elements.

In an apparatus according to an embodiment, the probability information assigned to a fault event signal may only comprise the alternatives indicating a possible root cause and indicating a consequential event. This may simplify the multidimensional image and the analysis of the physical network elements on which the multidimensional image is based. Alternatively or additionally, it may also increase the prediction speed.

In such an apparatus according to an embodiment, the evaluator may be adapted to consider a first assigned fault event signal as less likely to indicate the root cause, when a second assigned fault event signal assigned to the same container with the same hierarchy level, but a probability information indicating a lower probability of indicating a root cause exists. Alternatively or additionally, the evaluator may be adapted to provide the evaluation signal indicating an assigned fault event signal as the possible root cause irrespective of the assigned probability information, when to neither the container, to which the fault event signal is assigned, nor to an adjacent container of said container a different, further fault event signal with the same or a lower hierarchy level is assigned.. In some cases, the fault event signal may be repeatedly sent. This, however, does not represent a different, further fault event signal. Each of these evaluation schemes makes use of the probability information comprised in the underlying multidimensional image and may improve the accuracy of the root cause prediction

In an apparatus according to an embodiment, the evaluator may be adapted to provide the evaluation signal comprising information on assigned fault event signals assigned to one container and being assigned to a common hierarchy level irrespective of the corresponding probability information and suppressing information on assigned fault events with a higher hierarchy level assigned to the one container, when the one container and, optionally, one or more the adjacent containers do not comprise an assigned fault event with a lower hierarchy level. This may improve the analysis of a possible root cause even if a fault event signal cannot clearly be identified based on the probability information alone. In this case it may be advisable to provide the operator with a final choice. However, such an embodiment does improve the accuracy even in this situation by suppressing fault event signals having a high probability of not indicating the root cause, since these fault event signals are associated with a higher hierarchy level.

In an apparatus according to an embodiment, the evaluator may be adapted to evaluate the assigned fault event signals intermittently, for instance, after a predetermined, programmable or adjustable refresh time has elapsed, a control signal indicative of an evaluation command is received by the evaluator, an interrupt signal is received by the evaluator or another predetermined or adjustable condition is fulfilled. The evaluator may be adapted in this context such that a previously assigned fault event signal may be included in the evaluation, unless it is deleted or marked not to be considered in the evaluation. This may allow an improved evaluation since fault event signals received after a first evaluation may also be included in a later evaluation. As a consequence, the data set of fault event signals may be increased such that a specific fault event signal indicative of the possible root cause may be included in the evaluation.

An apparatus according to an embodiment may further comprise an imager adapted to create the multidimensional image of the information carrying network based on a topology of the information carrying network by at least assigning to each physical network element at least one physical core component and at least one physical interface component along with the information on the supported hierarchy levels and by assigning the containers to the physical core components, the physical interface components and the links between the physical interface components, wherein the imager is further adapted to store the multidimensional image of the information carrying network to the database. This may allow the apparatus to react more quickly to changes in the information carrying network, since it can create an updated version of the multidimensional image, if necessary or advisable.

In such an embodiment, the imager may be adapted such that the assigned at least one physical core component and the assigned at least one physical interface component along with the information on the supported hierarchy levels assigned to a physical network element are taken from a library database coupled to the imager. The imager and the library database may be adapted such that the assigned at least one physical core component and the assigned at least one physical interface component are assigned based on classification information and/or identification information of the physical network elements comprised in the topology. The library database may further comprise the additional information mentioned above.

In such an embodiment, the imager and the database may further be adapted such that the group of containers further comprises a super edge component, wherein the imager is adapted to establish whether a group of directly linked physical network elements supports a common link criterion. The imager may also be adapted to assign at least one node component and a plurality of edge components of the physical network elements of the group of directly linked physical network elements to a super edge container, when the criterion is fulfilled. The common link criterion may comprise a use of a common connection-oriented protocol, a common logic assignment, a common functional assignment (e.g. Virtual Private Network, VPN), and a common technology. Hereby an analysis may be improved, since in more complex communication systems with functionally or technically closely related physical network elements distributed over the information carrying network a root cause analysis may be more promising taking there relations into consideration.

An apparatus according to an embodiment may further comprise an analyzer adapted to analyze the information carrying network and to provide the topology of the information carrying network to the imager. This may allow the apparatus to work independently from topology information provided to the apparatus, which may be outdated or otherwise incomplete or incorrect. Therefore, a result of an analysis may be improved. An apparatus according to an embodiment may be adapted such that the multidimensional image is indicative of at least one of a data plane, a control plane, and a management plane of the information carrying network. In other embodiments, the multidimensional image may be indicative of two or of all of the mentioned planes. In other words, an embodiment may work on any of the three mentioned planes.

In case an embodiment is capable of processing two planes, it may be adapted to process the two planes independently from one another or together. In case an embodiment is capable of processing all three planes, the planes may be processed independently from one another. Alternatively, any of the planes may be processed independently, while the other two planes are processed together or all three planes may be processed together. Depending on the technology or technologies involved, this may further increase the accuracy of the root cause analysis.

The term multidimensional image refers to the fact that the multidimensional image may not only comprise information in two dimensions on the actual physical coordinates of the underlying physical network elements, but may also comprise information on the network planes or these information for up to three network planes, as well as information on the supported hierarchy levels (also referred to as "network levels"). Moreover, due to assigning fault event signals, it may further be subjected to changes over time or comprise corresponding information.

In the description, the term "communication network" does not only relate to communication networks in telecommunication environments, but also to other information carrying networks. The two terms "communication network" and "information carrying network" may, therefore, be used synonymously. An information carrying network may comprise any network which is adapted to transport data or information from one location to another location. For instance, an information carrying network may be formed by or comprise a computer network, for instance, that in a data processing center. It may also cover IT-networks (Information Technology), phone or other communication networks. It may also comprise networks, which have not been primarily constructed to facilitate an information interchange, but may be used as such, such as en electrical power network. The terms "communication network" and "information carrying network" may therefore be substituted by the term "network" in the sense outlined above.

Embodiments of an apparatus may further be adapted such that event signal not indicative of a fault, may be disregarded. In other words, the data processor and/or the evaluator may be adapted such that an event signal not indicative of a fault is disregarded. Alternatively or additionally, the apparatus may further comprise a filter adapted to receive event signals, the event signal not being indicative of a fault, and fault event signals, wherein the filter is further adapted to disregard the event signals and to provide the assigner with the fault event signals.

Some embodiments comprise a digital control circuit installed within the apparatus for performing the method for performing a random access procedure. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

Information and signals may comprise one or more attributes or data. Hence, the terms "information" and "attributes" or "data" can be used synonymously. Moreover, a single piece of information may be considered to be an attribute. Signals can also be messages in a transmittable form.

### Brief description of the Figures

Some embodiments of apparatuses and/or methods will be described in the following by way of example only, and with reference to the accompanying figures, in which
- Fig. 1: shows a block diagram of an apparatus according to an embodiment;
- Fig. 2: shows a flow chart of a method according to an embodiment;
- Fig. 3: shows a building block of a simplified network element model;
- Fig. 4: shows a schematic diagram of a network service and its network elements;
- Fig. 5: shows a more detailed diagram of one path of the diagram of Fig. 4;
- Fig. 6: shows a logical decomposition of a network element into hierarchy levels and node and edge components;
- Fig. 7: illustrates an event assignment to an interface component or a half edge component;
- Fig. 8: illustrates a fault event assignment tree;
- Fig. 9: shows a schematic view of a network with an Ethernet connection;
- Fig. 10: shows an edge component of the network in Fig. 9;
- Fig. 11: shows a block diagram of a network system comprising an apparatus according to an embodiment;
- Fig. 12: shows an information carrying network transferred into a network model;
- Fig. 13: shows a simplified multidimensional image of a chain of the information carrying network of Fig. 12;
- Fig. 14: shows a more detailed model of a connection between two routers in the chain of Fig. 13;
- Fig. 15: shows a more detailed multidimensional image of the connection between the two routers in Fig. 14; and
- Fig. 16: illustrates an exemplary order of received fault event signals.

### Description of Embodiments

Various example embodiments will now be described more fully with reference to the accompanying drawings in which some example embodiments are illustrated. In the drawings, the thicknesses of layers and/or regions may be exaggerated for clarity.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, and alternatives falling within the scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.). However, the term "adjacent" refers to two essentially identical elements coupled or arranged in such a way that no further specimen of such an essentially identical element is coupled or arranged in between.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

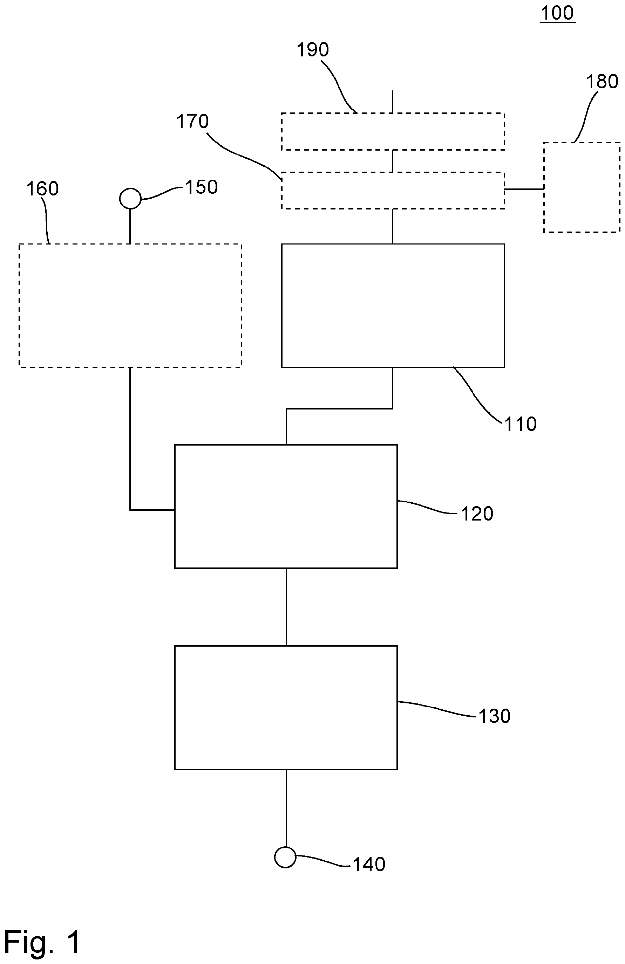

Fig. 1 shows a schematic diagram of an apparatus 100 according to an embodiment. The apparatus 100 comprises a database 110 which is adapted to store and, therefore, comprises a multidimensional image of an information carrying or communication network. The network, as will be laid out in more detail below, comprises a plurality of interconnected physical network elements.

The database 110 is coupled to a data processor 120, which in turn is coupled to an evaluator 130. An output of the evaluator 130 is coupled to an output 140 of the apparatus 100.

In the embodiment as depicted in Fig. 1, an input 150 of the apparatus 100 is coupled via an optional filter 160 to the data processor 120. Moreover, the database 110 is coupled to an optional imager 170, which in turn is coupled to both an optional library database 180 and an optional analyzer 190. The information carrying network to be analyzed in terms of correlated faults can then be coupled to the analyzer 190. However, the information carrying network and its plurality of interconnected physical network elements are not shown in Fig. 1 for simplicity reasons only. In the case of a non-IP-based network or a non-IP-based part of the network, employing an inventory database and a defined protocol to add or remove physical network elements may be advisable to implement.

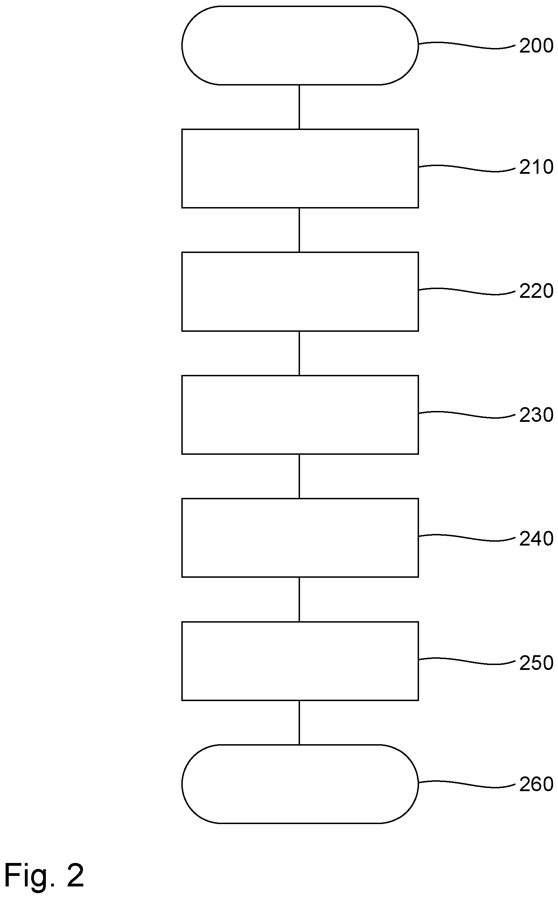

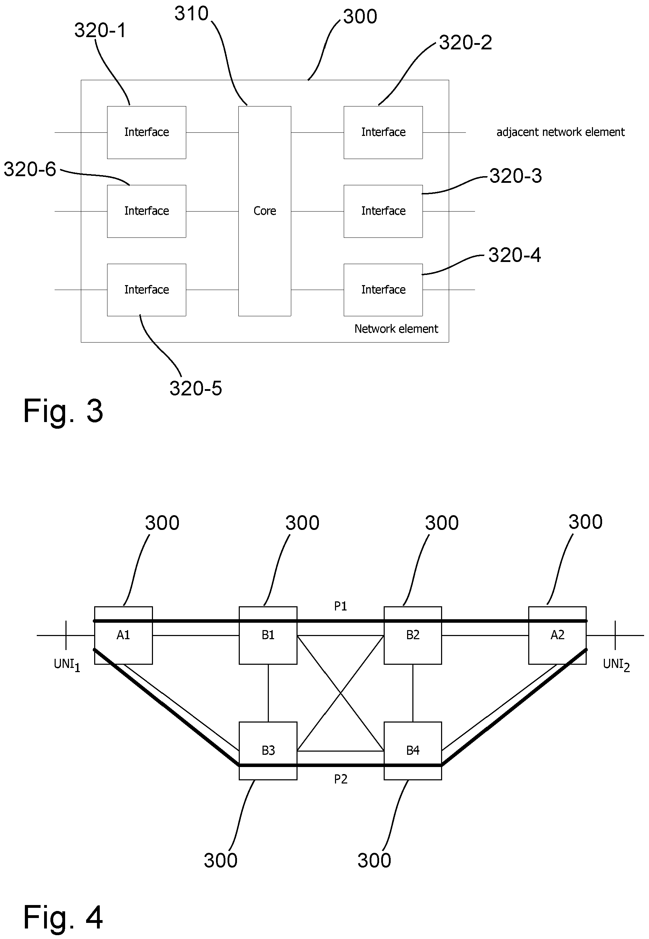

Since in context with Fig. 3 to Fig. 16 embodiments according to the present invention will be described in more detail, the description of Fig. 1 and 2 will mainly focus on functional details without taking specific technology-related issues into consideration.

The database 110 is adapted to store the multidimensional image of the information carrying network. In other words, the database 110 comprises the multidimensional image, but also comprises a plurality of interconnected image elements. The group of image elements comprises containers, physical interface components and physical core components of the physical network elements. The containers also represent a group comprising at least edge components and node components. The multidimensional image represents, therefore, a kind of map modeling the information carrying network and its physical network elements. More details on the model will be given below.

An edge component is indicative of at least two physical interface components of the physical network element and a link between the at least two physical interface components. A node component on the other hand is indicative of at least a physical component directly coupled to a physical interface component of the physical network element. In other words, an edge component comprises not only a link between two physical network elements but also the necessary infrastructure in terms of their interface components. The interface components are, however, not restricted to individual boards, modules or component assemblies. An interface component may spread over more assembly components based on a logical, technology-related or functional allocation. For instance, a part of an interface component may be comprised in a board, module, rack or even system comprising the actual interface to the link.

The link may be a physical link, for instance comprising a wire or a cable (e.g. electrical or optical), or a link may be a non-physical link, such as a wireless link, a radio link or an optical link. The node components describe the remaining components of the physical network elements "subtracting" the respective interface components. Therefore, the node components may coincide with the core components in case the physical interface components are completely comprised in the edge components. However, since this is a model of the information carrying network, it may be advisable to decompose the physical network elements differently, as will be laid out below.

The multidimensional image further comprises for at least some image elements of the multidimensional image information on hierarchy levels supported by the respective image elements. Furthermore, the database 110 may also comprise additional information also comprised in the multidimensional image.

Although in some embodiments of an apparatus 100 the database 110 may be provided only once, embodiments of an apparatus 100 may further comprise the optional imager 170, which is adapted to create the multidimensional image of the information carrying network based on a topology of the information carrying network. The topology may be provided by the analyzer 190 coupled to the imager 170. The imager 170 may assign to each physical network element identified by the analyzer 190 at least one physical core component and at least one physical interface component along with information on the supported hierarchy levels. These information and the physical decomposition into the at least one physical core component and the at least one physical interface component may be based on data stored in the optional library database 180.

The imager 170 is further adapted to assign the physical core components, the physical interface components and the links as determined by the analyzer 190 between the physical interface components to the containers. Furthermore, the imager 170 provides the database 110 with that created multidimensional image of the network communication.

In case the multidimensional image of the information carrying network comprises further information, same can also be stored in the library database 180. For instance, the multidimensional image may further comprise for at least one of the image elements of the underlying physical communication elements for at least one fault event signal probability information indicating a probability of indicating the presence of the root cause.

The data processor 120 is adapted to receive via the input 150 at least one fault event signal. It is further adapted to assign the at least one fault event signal to a container and a hierarchy level associated with the image element as defined in the multidimensional image of the information carrying network. To facilitate this, the data processor 120 is coupled to both the input 150 and the database 110 in which the multidimensional image is stored. Naturally, in case the multidimensional image comprises further information concerning the image elements, these may also be used in the assigning process.

In case the input 150 is not only provided with fault event signals but also with other event signals not indicative of a fault event, the optional filter 160 may be implemented, which in turn may be adapted such that only fault event signals up costs to the data processor 120. Event signals not indicative of a fault event may, hence, be suppressed by the filter 160. However, in other embodiments the functionality of the filter 160 may be implemented in the data processor 120 or the evaluator 130.

The apparatus 100 according to an embodiment further comprises the evaluator 130 which is adapted to evaluate the at least one assigned fault event signal by correlating information on the containers and the hierarchy levels of the at least one assigned fault event signal. It is further adapted to provide the evaluation signal indicative of a possible correlation of the at least one assigned fault signal based on the evaluation at the output 140 coupled to the evaluator 130. The evaluator 130 may further be adapted to provide the evaluation signal comprising an information on a possible root cause having triggered the at least one fault event signal. To facilitate this, the evaluator 130 may evaluate the assigned fault event signals based on strategies or criterions which will be laid out in more detail below.

Fig. 2 shows a flowchart of a method for correlating faults in the information carrying network comprising reality plurality of interconnected physical network elements according to an embodiment as explained above. After a start in a step 200, the method comprises providing the multidimensional image 210 of the information carrying network as defined above. It further comprises receiving 220 at least one fault event signal and assigning 230 the at least one fault event signal to a container and a hierarchy level associated with the image element as defined in the multidimensional image of the information carrying network. It further comprises evaluating 240 the at least one assigned fault event signal by correlating information on the containers and the hierarchy level of the at least one assigned fault event signal if further comprises providing an evaluation signal 250 indicative of a possible correlation of the at least one assigned fault event signal based on the evaluation, before the method ends in a step 260.

Although the flowchart, as depicted in Fig. 2, indicates an order of the steps described, it is apparent that only a few steps may be advisable to be performed before other steps. For instance, evaluating 240 the at least one assigned fault event signal should be carried out after the assigning 230 the at least one fault event signal. It might also be advisable to provide 210 the multidimensional image before the assigning 230. However, the other steps are not required to be operated or executed in the described order. For instance, the steps of providing 210 and receiving 220 may be switched in order. Furthermore, these may also take place simultaneously.

However, before going into more details, a more systematic approach to the models and tools behind appear to be helpful. Embodiments of an apparatus 100 may facilitate an on-time display of a result of a root cause analysis in a multilayer network infrastructure. In other words, it may be able to display, for instance, critical events in near real-time on an integrated fault management (IFM) system.

In particular, an IFM based on an embodiment may determine which events belong together and what the root cause was. As a result the incident management can receive the information where did it happen and what physical components may need to be replaced. The service management can then be informed which network services were affected and at what time the impairment started and ended.

An embodiment may offer a more accurate root cause analysis than products in current use. This is enabled by employing the root cause analysis on a network level model. It may be advisable to implement an inventory system in the framework of the analyzer 190. An apparatus 100 according to an embodiment may further offer to identify network services affected by a fault. The multidimensional image represents a key element, which is based on a network element model described in more detail below. The related (fault) event list may, furthermore, allow a step by step analysis of the event analysis.

In current implementations, critical events are displayed in an element management system (EMS) or a network management system (NMS) minutes before they are displayed in the IFM system. In addition, based on feedback received from the field, it seems that the accuracy of the root cause analysis leaves room for improvement. Furthermore, compared to a conventional approach, it may be desirable to have a traceable root cause analysis to check how the root cause was determined. In other words, it may be advisable to apply a more systematic approach.

In current implementations events are collected in a central database. Those events are normalized, analyzed, de-duplicated, filtered and categorized. The remaining events are processed by customized rule sets and, hopefully, a root cause is found. IBM-Tivoli Netcool with all its components may provide a suitable basis for an IFM system. This software suite in its present form provides a sufficient solution as long as "simple" network infrastructures need to be monitored. However, embodiments are by far not limited to the IBM infrastructure. It merely represents a basis for implementing an apparatus or a method according to an embodiment.

IP-based (Internet Protocol) network infrastructures can be discovered and monitored fairly easily with the ITNM (IBM Tivoli Network Manager), as long as the IP-based network elements are connected or interconnected by copper or fiber. When routers or switches are directly connected with a fiber or copper cable, failures can be detected by the routers or switches at both ends of the respective connection. However, when IP-based network elements are connected by network services like Ethernet over SDH (EoS or EoSDH; SDH = Synchronous Digital Hierarchy), link disruptions in the data plane may eventually not be detectable.

In such a network, the interfaces between router or switch and a multiservice node (MSN) may be up and running, while the network service itself is interrupted within the network infrastructure. In such a case fault correlation (in the IP-based part) has to rely on information issued by the control plane (e.g. router adjacency down). The root cause analysis of the IP-based part may hence provide an indication that a link is down. This information, however, will most likely have a low severity as re-routing will prevent this fault to become service affecting.

Depending on the sophistication of the root cause analysis in the MSN-based network infrastructure, a root cause is found and displayed in the IFM. Nevertheless, the results of the root cause analysis in the IP and MSN part are decoupled. In a conventional system, human intervention may therefore be required to relate the root causes determined in the IP and MSN parts.

Interestingly enough, a similar situation may exist when the MSN-based network has to rely on complex links, i.e. links with cipher or microwave equipment. In such an environment, the root cause analysis of the MSN part may locate a link down, but not its root cause. An application of an embodiment of an apparatus 100 to this scenario will be described in more detail below.

Furthermore, current implementations rely on a set of customized rule files. A rule file provides the means to relate events to each other and to determine the root cause. The quality of the root cause analysis is, hence, directly related to the skills of the implementers. Rule files are usually created by observing the behavior of the monitored network infrastructure. Events are logged and the implementer tries to understand how the events relate to each other. During the lifetime of the system many events are issued by the network infrastructure that were not observed during the period of the rule file establishment. This leads to considerable work after the IFM has been commissioned. Operational experience shows that the expected productivity gains could not be realized. This is attributed mostly to poor correlation results in the IFM.

Event formats and content are not strictly standardized. This results in different events for the same cause (e.g. SFP not working) in network elements from different vendors. Multivendor network infrastructures, even for the same network level, are common. That leads to duplication and of the work and sometimes to a different result of the root cause analysis.

Embodiments follow, therefore, a more systematic approach. The basic idea is to build a specific view, the multidimensional image or network model of the network infrastructure, and directly allocate or assign the events to this model, when they are received. In other words embodiments employ a more suitable model of the information carrying network to be monitored. The model can be applied to any network infrastructure and technology, but may require an inventory system or a system capable of exploring the topology of the network. The location, such as the node component, the edge component, a super edge component - as introduced below - along with the hierarchy information (network level), of the different fault events and their relationship are typically enough to reveal a sufficient amount of information to identify the root cause. The position of the root cause in the model then identifies the affected network services. The network services, which are often represented by logical interconnections, logical links and Virtual Private Networks (VPN), may also be comprised in the multidimensional image as stored in the database of the apparatus. They may be represented in the multidimensional image of the network by super edge components or other containers, which are allocated or assigned based on the technology or logical structure underlying these services.

The foundation for an efficient and traceable fault correlation in a multilayer network infrastructure is a rigid description or model of the network infrastructure and the associated network elements. This model is then implemented in an embodiment as the multidimensional image of the information carrying network.

The model and, hence, the multidimensional image of the information carrying network, is based on a network level model, which allows to precisely describe a complex multiservice network infrastructure. It further allows characterizing an existing customer network infrastructure to allow service managers to obtain a quick overview and to support the root cause analysis, as will be shown next. It is, however, not identical with the Open Systems Interconnection Reference Model (OSI-RM).

In the network level model, three different kinds of network levels are distinguished, the native, the non-native and the functional network level. A network level is defined to be native, when the network element transport directly employs a protocol and does not encapsulate this protocol. An example for a native network level is a router with Ethernet interfaces supporting MPLS (Multiprotocol Label Switching), which comprises the native network levels infrastructure, Ethernet, MPLS and IP.

A non-native network level is a level, in which the network element encapsulates a protocol before it is transported. One example is a router supporting E1 interfaces (E1 denoting the Primary Rate Interface (PRI) in Europe, c.f T1 for USA and J1 for Japan) and encapsulating the E1 information in IP packets, which comprises the non-native network level E1. A further example is a SDH-based network element supporting Ethernet interfaces and encapsulating this information in SDH. This comprises the non-native interface Ethernet.

A functional network level is a level, in which a network element inherently supports certain functions necessary for operation of the network element itself or providing specific network services. An example is, for instance, a SDH-based network element which supports the data communication network (DCN) as well as synchronization. Therefore, two functional network levels are present in this example, the DCN and the synchronization. A further example is a router, which may - via specific protocols on different network levels - support virtual private networks (VPNs). Therefore, the corresponding Virtual Private LAN Service (VPLS) and the Virtual Private Routed Network (VPRN) are regarded as functional network levels. Further examples comprise Network Time Protocol (NTP) and Domain Name System (DNS), which are also supported via specific protocols (on network level IP) and are, therefore, also defined as functional network levels.

During the development of B-ISDN the plane model was introduced. This model allows three distinctive views towards the network infrastructure, the data plane, the control plane, and the management plane. The data plane transports all information, while the control plane can be subdivided into a signaling and routing part. The signaling part is used to establish, maintain and tear down a connection. The routing part draws a (local) network map augmented with additional information necessary to direct packet to the correct interface. The management plane is concerned with local administrative tasks as well as the management of the complete network. Each plane can be considered as a separate entity. The control plane may even be a completely separate network infrastructure (e.g. Signaling System #7 or SS7).

A management plane may comprise separate network elements supporting only management functions (e.g. out-of-band management of an IP-based network infrastructure, router to connect the data communication network (DCN) to a management layer). A part of the management plane may be in-band utilizing exactly the same network element as the data and the control plane.

Fig. 3 shows a basic building block of a simplified network element model, which is based on Alcatel Network Verification Tool (ANVT). Although originally designed to allow a calculation of the network service availability, it represents a highly suitable starting point for the model underlying the multidimensional image employed in an embodiment. This network element model is based on a core and an interface part.

Fig. 3 shows a physical network element 300 comprising a physical core component 310 and at least one physical interface component 320. To be more precise, the physical network element 300 as shown in Fig. 3 comprises 6 physical interface components 320-1, ..., 320-6, although the number may naturally be varied.

In a first step in this model, a relationship of the path of the network service to the network elements 300 is established, before in a second step the corresponding components (cores 310 and interfaces 320) are established or assigned. In other words, in the first step, the topology of the network is determined.

To illustrate this, Fig. 4 shows a schematic diagram of a relationship between network services and network elements. Fig. 4 shows a part of a network service connecting a first user network interface UNI1 to second user network interface UNI2, which is provided by chains or paths P1 and P2. Paths P1 and P2 are redundant. Path P1 is supported by a series of network elements 300, which are denoted in Fig. 4 as A1, B1, B2, and A2, respectively, while path P2 is supported by the network elements 300, denoted by A1, B3, B4, and A2, respectively.

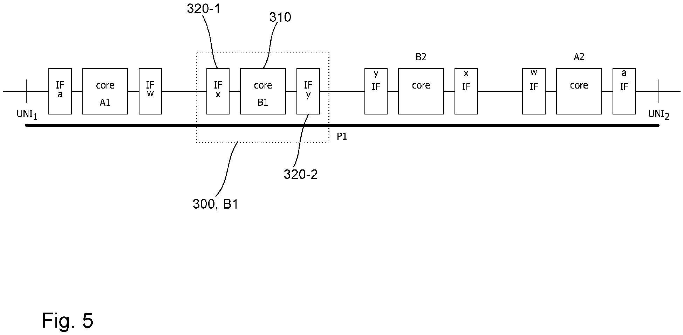

After establishing the topology, in the second step to each of the network elements 300 its corresponding core component(s) 310 and its corresponding interface component(s) 320 are assigned. To illustrate this step more closely, Fig. 5 shows a more detailed diagram of path P1 as introduced in Fig. 4. As illustrated with respect to the network element B1 (physical network element 300) to each network element at least one core component 310 (core B1) and at least one interface component 320-1, 320-2 (interfaces IFx and IFy) are allocated. As a result of this step, path P1 is decomposed into a series of core components 310 and interface components 320, which comprises the core and interface (IF) components
IFa - core A1 - IFw - IFx - core B1 - IFy - yIF - core B2 - xIF - wIF - core A2 -aIF
between the first and second user network interfaces UNI1 and UNI2.

For the pure availability calculation, the physical boards comprising the network elements were sufficient for this network element model. The boards were directly related with failure in time (FIT) values required for this calculation. Unfortunately, this model is not sufficient for a root cause analysis, but does represent a more than suitable basis.

The root cause analysis requires an association of the events with the corresponding network level in a particular network element and its position in a node or an edge component. A network level may eventually not be represented in a single board, it may span over more than one board or more than one network level may be present on one board. Furthermore, a failure may not impact all edges that are present in one board. A more elaborated network element model was developed fitting the particular requirements for an efficient root cause analysis.

Any network element may be decomposed in different ways. The most straight forward way is a decomposition into physical components. For instance, based on an Alcatel-Lucent 7750SR, the physical components may be grouped to node components comprising, for instance, a chassis, a switching module, and a power module. An edge component may comprise one or more interfaces.

In the example above, the edge components may comprise, for instance, a 1GE interface hosted in a Media Dependent Adapter (MDA) and the media dependent adapter hosted in an input output module (IOM3-XP) board. It should be noted that in such an example a plurality of edges, for instance ten edges, may be supported. Naturally, in the case of different embodiments and/or network elements 300, a different decomposition may be more suitable. However, a physical interface component 320 may comprise several modules of different types. For instance, a physical interface component 320 may comprise one or more modules, which are connected. For instance, the module, to which a cable or a fiber is attached may be a SFP module (Small Form-factor Pluggable), which is fit into a corresponding accommodating socket.

In other words, the physical components of a physical network element are decomposed into at least one physical core component 310 and at least one physical interface component 320, such that the interface component 320 is a suitable component of an edge component. The physical decomposition can be applied to any network element irrespective of its technology base (WDM, SDH, Ethernet, IP, Frame Relay, ATM, ...).

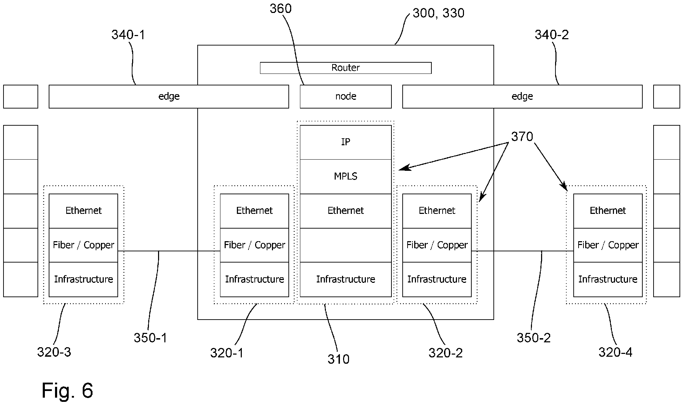

Taking the physical decomposition as a basis, the core components can be logically grouped or decomposed into at least a node component. Each physical interface becomes a delimiting part of an edge. To illustrate this in more detail, Fig. 6 shows a physical network element 300 coupled to a communication network. As indicated in Fig. 6, the network element 300 is a router 330. Fig. 6 shows two physical interface components 320-1, 320-2 of the router 330, which are connected to a physical core component 310.

In this network model to derive the appropriate multidimensional image, each of the interface components 320-1, 320-2 is assigned to an edge component 340. To be more specific, since the two interface components 320-1, 320-2 are not in a loop-back configuration, the two interface components 320-1, 320-2 are assigned to two different edge components 340-1, 340-2, which is shown in Fig. 6 as blocks drawn above the respective components 320.

Apart from the interface components 320-1, 320-1, the two edge components 340-1, 340-2 also comprise each a link 350-1, 350-2, respectively, which may, for instance, be in a real-life situation a copper-based connection, an optical fiber or a radio transmission path. The edge components 340-1, 340-2 furthermore comprise each a physical interface component 320-3, 320-4 of neighboring or adjacent network elements 300, respectively. In other words, the edge components 340 are indicative of at least two physical interface components 320 of at least one physical network element 300 and a link 350 between the at least two physical interface components 320.

The edge components 340-1, 340-2 are coupled or connected to a node component 360 of the network element 300. In the situation depicted in Fig. 6, the node component 360 is essentially identical with the core component 310 of the network element 300. However, in other cases, the node component 360 may be different from the core components 310. For instance, in case the network element 300 (router 330) comprises unused interface components 320, they - due to a lack of a corresponding link 350 - may be attributed to the node component 360. Also other differences from the core component 310 and the node component 360 may be present in specific cases. One such case may, for instance, be present, when a hierarchy of edges and nodes exists, when, for instance, inside a node component 360 it is considered to be useful to distinguish between some intra-node-links. An example will be given later.

In other words, a node component 360 is indicative of at least a physical component directly coupled to a physical interface component 320 of a physical network element 300.

The node component 360 as well as the edge component 340 are associated with the supported network levels. The association with network levels reflects a logical grouping of functions located in the different physical components. The implementation of those functions may span several physical components. This association may be known - if, for instance, a detailed specification of the network element 300 is available - or unknown. In the latter case, the logical decomposition may be based on the events a network element is able to emit.

In the previously mentioned example, the edge component 340 is physically supported by an SFP, which in turn is a part of the MDA. The MDA supports this edge and is a part of the IOM that supports the MDA. It is assumed that all Ethernet-related functionalities are hosted in either the MDA or the IOM. The node components 360 may support all IP/MPLS-related functions (MPLS = Multiprotocol Label Switching; IP = Internet Protocol).Would, for instance as mentioned above, all 10 GE interface host an SFP, the network element model would have one node component 360 and 10 similar edge components 340, if connected to 10 different links 350.

As indicated in Fig. 6, information on hierarchy levels supported by the components 310, 320, 340, 360 are also associated with the respective components. To be more specific, the hierarchy levels 370 may be assigned to any of the shown components. In other words, the hierarchy information may be attributed to any of the physical core components 310, the physical interface components 320, the edge components 340 and the node components 360. As to whether the hierarchy information are assigned to the physical core and interface components 310, 320 or the node and edge components 340, 360 or any combination thereof, may depend on a variety of parameters. For instance, in the case of intra-network element communication, it may be sufficient to assign the hierarchy information to the respective edge component. However, in the case of a wide area network, including for instance a radio or microwave path between stations separated by several kilometers or miles, an assignment of the hierarchy information to the individual interface components 320 of an edge component 340 may be more suitable than assigning these information only to the respective edge component 340.

As will be explained in more detail below, the components 310, 320, 340, 360 illustrated in Fig. 6 are building blocks of the multidimensional image comprised in the database 110 of an apparatus 100 according to an embodiment. The components are therefore summarized as "image elements", which are in the case of a multidimensional image interconnected. Hence, the group of image elements comprises containers, physical interface components 320 of the physical network elements 300 and physical core components 310 of the physical network elements 300. The group of containers comprises the edge components 340 and the node components 360. However, further components, such as the "super edge components" introduced later, are also comprised in the group of containers and, hence, in the group of image elements.

Due to the complexity of the information and components of which the multidimensional image is created, a complete two- or three-dimensional sketch is typically not realizable. Moreover, the multidimensional image may further comprise information, such as probability information, which would make such an attempt even more problematic.

During operation of an embodiment, all events, indicated by an event signal or a fault event signal, that the network element 300 is able to emit or transmit are assigned to a class. Event signals are in this context considered to be not indicative of a fault. Events that do not contain any potential fault information (event signals) are set aside and may be used by the filter 160. In other words, the event signals are not assigned to a class or may be suppressed. As outlined before, this may, for instance, be done by a filter 160.

Each event containing potential fault information (fault event signal) is assigned to at least one respective image element, i.e. to a node 360, to an edge 340, an interface component 320 or to an core component 310. Naturally, a fault event signal may also be assigned to more than one image element to facilitate, for instance, a more elaborate analysis, as will be outlined below. Moreover, it is also assigned to the affected network level.

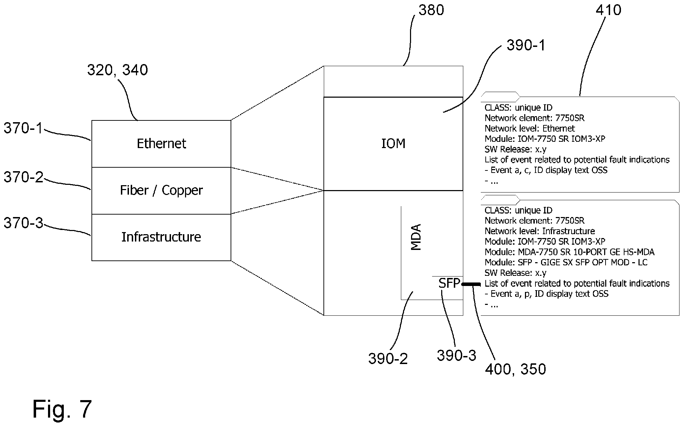

Fig. 7 illustrates an event assignment to an interface component or an edge component. It shows an interface component 320 of an edge component 340 comprising the hierarchy levels "Ethernet" 370-1, "Fiber / Copper" 370-2, and "Infrastructure" 370-3. The interface component 320 is physically realized by frame 380 comprising a hierarchy of individual physical modules 390. To be more specific, the frame 380 accommodates a first module 390-1 (IOM = Input / Output Module), a second module 390-2 (MDA = Media Dependent Adapter) coupled to the first module 390-1 and a third module 390-3 (SFP = Small Form-factor Pluggable) coupled to the second module 390-2. A cable 400 is coupled to the third module 390-3. Moreover, the frame 380 shown in Fig. 7 also comprises at least some components, which will later be assigned with a node component. This illustrates that the logical decomposition into edge and node compositions may span several boards or other assembly components.

The hierarchy levels 370 may be allocated to the frame 380 and/or to different modules 390 or even different parts of the modules 390. To be more specific, as indicated by the dotted lines in Fig. 7, the hierarchy level 370-1 ("Ethernet") can be attributed to the frame 380 and at least parts of the first module 390-1. The hierarchy level 370-3 ("Infrastructure") can be assigned to at least a part of the first module 390-1 and to the second and third modules 390-2, 390-3. The hierarchy level 390-2 ("Fiber / Cable") can more easily be attributed to the cable 400 and, hence, to the link 350.

Fig. 7 further illustrates possible database entries 410 of the library database 180. The database entries 410 as shown in Fig. 7 merely illustrate possibilities. The entries 410 comprise information for each physical component of the network element 300 (not shown in Fig. 7). Among the data comprised in the entries 410 can be, for instance, an identifier of the respective component or the network element 300 comprising the respective component, information concerning software versions, supported hierarchy levels, and a list of possible fault event signals or messages. Based on these database entries 410 an imager 170 can build the appropriate multidimensional image.

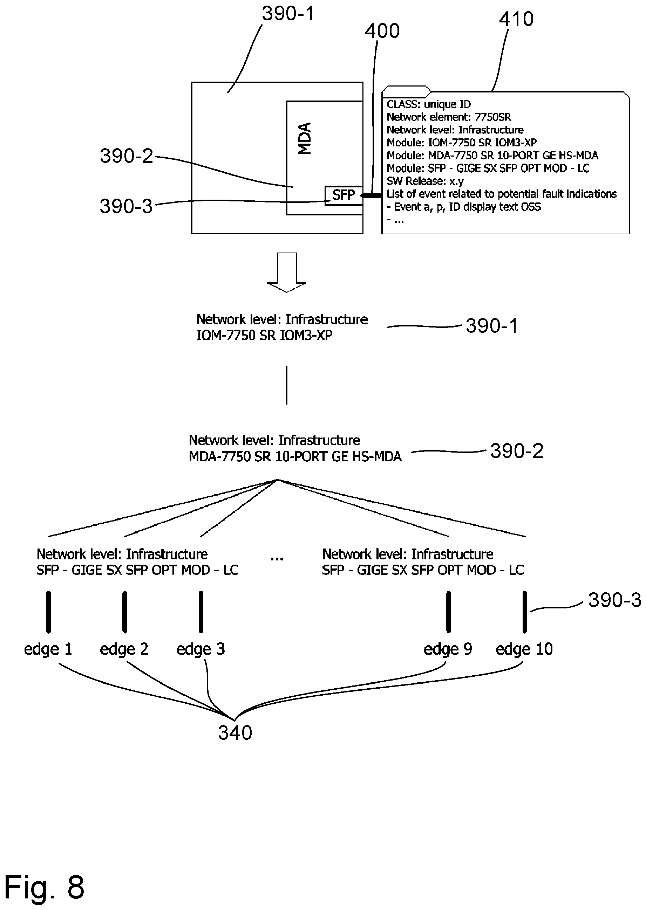

Due to the module hierarchy described above, a fault event assignment can also be regarded as forming an inheritance tree. To illustrate this, Fig. 8 illustrates an fault event assignment tree based on the physical components shown in Fig. 7. In case a module 390 located at a higher module hierarchy level experiences a fault, this will - with a very high probability - also result in a fault situation of the modules 390 coupled to the faulty module 390 with a lower module hierarchy level. For instance, a fault event of module 390-1 will - most likely - also result in a fault event of module 390-2 and of any of the modules 390-3. Since at least module 390-3 is also part of an edge component 340, all edge components 340 being coupled to the faulty module 390-1 will - most likely - experience a fault event. In other words, each edge 340 inherits the potential events the modules 390-1 and the module 390-2 can potentially emit. However, fault events related to an SFP (module 390-3) will probably only affect the supported edge 340. In other words, the fault events form a kind of class tree.

Due to the heritage of fault events described above, it may be advisable in embodiment to introduce a further distinction with respect to the probability of a fault event being a root cause or merely a consequential fault event, each indicated by an appropriate signal or message. An event may be potentially a root cause or indicate an impact of a root cause.

For instance, when a SFP-module (module 390-3) fails, it may emit a fault event signal indicating a transmitter failure. It may also seize to receive light and may therefore emit a fault event signal indicating a loss of light (or signal). Both events will be assigned to the network level infrastructure 370-3, as it is related to hardware.

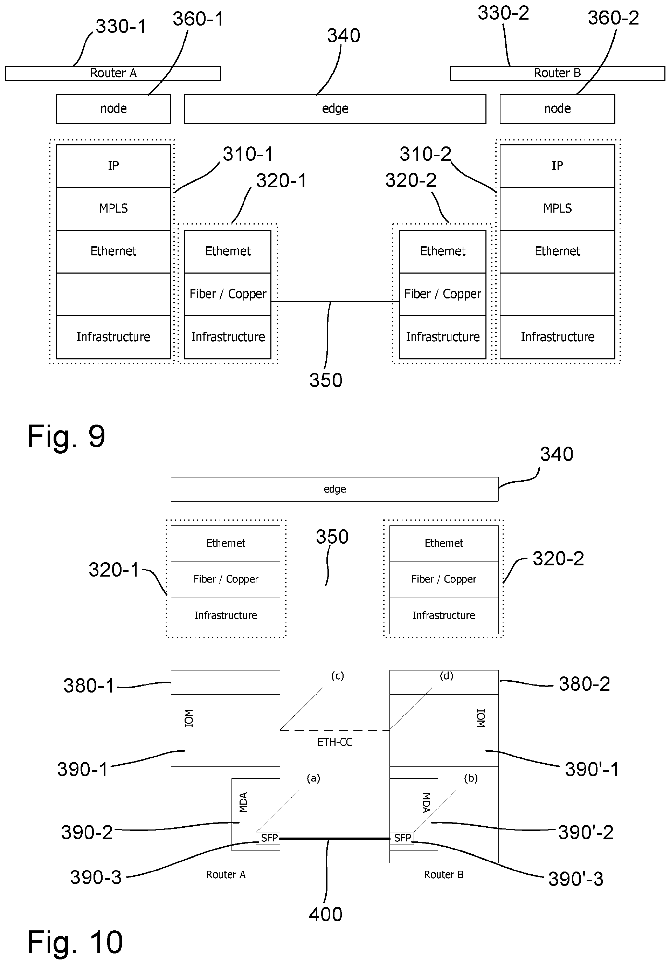

Fig. 9 serves as further basis to explain event relations and is based on Fig. 6. Fig. 9 shows two routers, a first router 330-1 (Router A) and a second router 330-2 (Router B), which are connected to each other via an Ethernet connection link (link 350). As outlined above, both comprise a core component 310-1 and 310-2, respectively, and an interface component 320-1 and 320-2, respectively. The two interface components 320 and the link 350 form the edge component 340, while the core components 310-1 and 310-2 form - at least for these two routers 330 and in this case - the node components 360-1 and 360-2, respectively.

Fig. 10 shows in an upper part a close-up of the edge 340 of Fig. 9, while the lower part shows the physical components thereof as shown in Fig. 7. The first router 330-1 (Router A) comprises frame 380-1 with the hierarchy of modules 390-1, 390-2, and 390-3, wherein module 390-1 is a SFP. The second router 330-2 (Router B) comprises correspondingly a frame 380-2 with a similar hierarchy of modules 390'-1, 390'-2, and 390'-3, wherein also module 390'-1 is a SFP. Both SFPs are interconnected via a cable 400 physically representing link 350. Hence, Fig. 10 shows a mapping of the network levels to their corresponding physical components.

Fig. 10 also shows an event mapping of the edge component 340 supporting the Ethernet connection. The Ethernet connection has ETH-CC (Ethernet - continuity check) enabled. The SFP 390-3 in the first router 330-1 supporting the edge 340 and carrying the Ethernet connection fails. As a consequence, four fault event signals, indicated by (a), (b), (c), and (d), are emitted in random order by the two routers 330-1 and 330-2. SFP 390-3 reports "SFP fails" (signal (a)). SFP 390'-3 reports - due to the activated continuity check - "SFP receives no light" (signal (b)). As a consequence, module 390-1 reports "ETH-CC - loss of continuity" (signal (c)) and module 390'-1 also reports "ETH-CC - loss of continuity" (signal (d)).

The root cause can easily be discerned by relating all four events (a), (b), (c), (d) to the same edge 340. Fault events within the same edge 340 at higher network levels are similarly related to the root cause, but cannot represent the root cause. A root cause is typically found at the lowest possible network level. As outlined in context with Fig7, fault event signals (c) and (d) are associated with the higher hierarchy level 370-1 "Ethernet", while fault events (a) and (b) are associated with the lower hierarchy level 370-3 "Infrastructure". In other words, the evaluator 130 may be adapted to consider a first assigned fault event signal (c), (d) as less likely to indicate the root cause, when a second assigned fault event signal (a) assigned to the same container with a lower hierarchy level exists.

Is more than one fault event at the lowest network level present, the fault event which has an indication as a possible root cause, is most likely to be the root cause. To facilitate this, the database 110 may be adapted in such a way that the multidimensional image comprises for at least one image element as defined above for at least one fault event signal a probability information indicating a probability of indicating a root cause. Accordingly, the evaluator 130 may be adapted such that the evaluation bases the analysis on the probability information, when available. In embodiments the probability information assigned to a fault event signal may, for instance, only comprise the alternatives of indicating a possible root cause ("prc") and of indicating a consequential fault event ("con"). However, in other embodiments the probability information may comprise more probability levels. For instance, it predefined number of bits, e.g. 2, 3, 4 or any other integer number n of bits, may be used to differentiate 2ⁿ different probabilities.

In this case, the evaluator 130 may be adapted to consider a first assigned fault event signal as less likely to indicate the root cause, when a second assigned fault event signal assigned to the same container with the same hierarchy level, but a probability information indicating a lower probability of indicating a root cause exists.

However, in some cases, basing the evaluation on the probability information may simply comprise the possibility of ignoring these. This may be advisable when, to neither the container, to which a fault event signal irrespective of the corresponding probability information is assigned, nor to an adjacent container a further assigned fault event signal with the same or a lower hierarchy level is assigned. In this case, the evaluator 130 may be adapted to provide the evaluation signal indicating an assigned fault event signal as the possible root cause.

Furthermore, the evaluator 120 may be adapted to provide the evaluation signal comprising information on assigned fault event signals assigned to one container and being assigned to a common hierarchy level irrespective of the corresponding probability information and suppressing information on assigned fault events with a higher hierarchy level assigned to the one container, when the one container and the adjacent containers do not comprise an assigned fault event with a lower hierarchy level. In other words, sometimes the best analysis may only provide information containing the presence of fault events of the lowest hierarchy level affected. Examples will be given below.

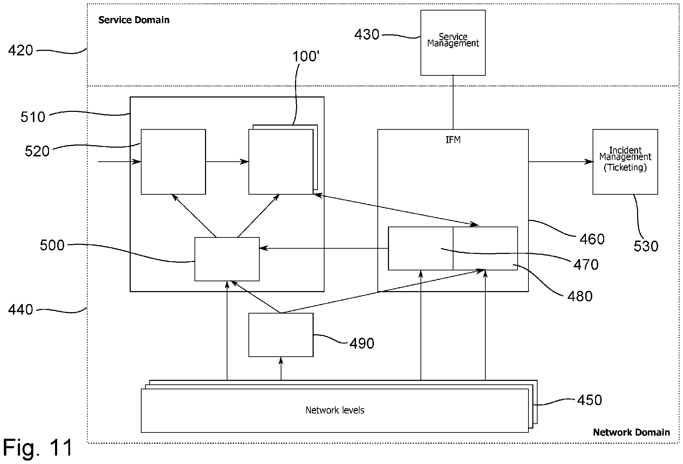

Fig. 11 shows a selected architecture of an operation support system (OSS) comprising an apparatus 100 according to an embodiment. A service domain 420 comprising a service management system 430 is shown for completeness sake. Fig. 11 will also be used to provide a functional overview.

Apart from the service domain 420, the architecture also comprises a network domain 440. In the network domain 440 exists a communication network infrastructure 450 with the three planes outlined before, the management plane, the control plane, and the data plane. Each of the planes is indicated. The communication network infrastructure 450 is coupled to an integrated fault management (IFM) system 460, which comprises the previously mentioned IBM Tivoli Network Manager 470 (ITNM) and a data refinement system 480. However, apparatuses 100 according to an embodiment are not limited to employing the ITNM system. The ITNM system is merely one basic system in which an embodiment can be integrated.

The communication network infrastructure 450 is, furthermore, coupled to element/network management systems 490 (EMS/NMS), which in turn are coupled to both the data refinement system 480 and a data transformation module 500 (ETL = extract, transform, load) of a configuration management database 510.

The configuration management database 510 further comprises a first apparatus 100 and a second apparatus 100' according to embodiments. The apparatus 100 is in the further description assumed to be the active apparatus 100, while apparatus 100' will be used as a replacement apparatus for switching same during operation of the system. The apparatuses 100, 100' are also referred to as "event correlation databases".

The configuration management database 510 further comprises an inventory system 520, which can, for instance, be based on the, COMMAND software by FNT. The system shown in Fig. 11 further comprises an incident management system 530, which is also referred to as a ticketing system and which is coupled to the integrated fault manager 460.

The network domain 440, hence, comprises four main building blocks. The network infrastructure 450 with all network levels separated into management, control and data plane with the associated management layers forms the first main building block. The second is formed by the configuration management database 510 based on the inventory system 520 (e.g., COMMAND software by FNT), the event correlation database (ECDB) 100 and the data transformation module 500 (ETL = extract, transform, load). The third is formed by the integrated fault management system 460 based on IBM Netcool Tivoli, of which only some components are shown. The fourth building block is formed by the incident management system 530, which may, for instance, be based on BMC Remedy.

Before any operation of the system shown in Fig. 11 can start, the network infrastructure 450 needs to be mapped. This can happen during the engineering phase, while the build-out is planned (e.g. in COMMAND) and physically built. When the network infrastructure 450 is ready for operation, the inventory database should contain an accurate view of the physical network infrastructure and its interconnections.

Changes to the network infrastructure 450 should be controlled by a change process. This process should be able to guarantees that physical changes in the network infrastructure 450 are planned, documented and introduced to the network infrastructure 450 with minimal impact to operation. When the network 450 is ready for operation a number of actions are performed to initiate the IFM 460. These actions may be repeated regularly, e.g. every night or according to another schedule, to obtain the most accurate view of the network.

This can, for instance, be initiated by the ITNM 470, which may discover all IP-based network elements 300 (not shown in Fig. 11) and establishes a topology view of the IP-based and MPLS-based network level. The element/network management systems 490 can retrieve topology information from all non-IP-based network elements, e.g. SDH. The data transformation module 500 (ETL) may then retrieve topology information from all non IP-based network elements that are not connected to an element/network management systems 490. ITMN 470 transfers the topology information and all physical network element information to the data transformation module 500 (ETL). The element/network management systems 490 also transfers the topology information and all physical network element information to the data transformation module 500 (ETL). In other words, the ITNM 470, the element/network management systems 490, and the data transformation module 500 (ETL) work as an analyzer adapted to analyze the information carrying network or its infrastructure 450 and to provide the topology of the network to the imager comprised in the apparatuses or ECDBs 100, 100'.

The data transformation module 500 (ETL) then transforms the data in a format required by or more suitable for the inventory system 520 (e.g. COMMAND) and the ECDB 100, 100' according to embodiments. The data transformation module 500 (ETL) transfers the physical network element data as well as the topology information of each network level to a staging area in the inventory system 520. It also transfers the information of all network services to ECDB 100, 100'.

The inventory system 520 compares the data in the staging area with the inventory data and prepares a delta report. A delta report can only contain entries, when the change process was bypassed. A positive delta report indicates additional, e.g. unplanned network elements 300 present in the network infrastructure 450. A negative delta report reveals network elements 300 that have been removed without observing the change process.

The inventory system 520 transfers the inventory as well as the specifically marked positive and negative delta network elements to a new ECDB 100'. The new ECDB 100' builds an up-to-date multidimensional image (e.g. using its imager 170) of the network level model based on the instantiated network elements models. After construction of the network level model (multidimensional image), the network services are overlaid. At this point the new ECDB 100' is ready for operation and can receive and process events from the network levels.

During normal operation, an active ECDB 100 is already receiving and processing events. In this case a switch-over from the active ECDB 100 to the new ECDB 100' needs to be performed. The switch-over may be performed by the new ECDB 100' receiving and processing events from the network levels of the network infrastructure 450. The active ECDB 100 becomes then dormant. The events already allocated in the now dormant ECDB 100 are transferred to the new ECDB 100'. The information transfer from the ECDB 100 towards the IFM 460 is interrupted as long as the ECDB 100 is in the previously described switch-over process.

Next, the event processing will be described in more detail. However, first of all, a short overview of the processes in the system shown in Fig. 11 will be given first.

The SNMP-capable (Simple Network Management Protocol) network elements 300 emit fault event signals which will be stored in the data refinement system 480. Events from non-IP-capable network element 300 will be received by the appropriate element/network management systems 490. Events collected in the element/network management systems 490 will be forwarded to the data refinement system 480.

Incoming fault event signals are directly associated with the proper location in the network level model in the active ECDB 100. Further handling of the event will be described in more detail below. The outcome of the event analysis will be reported back to data refinement system 480 for further processing, for instance to be displayed by the service management system 430 being coupled to the IFM 460.

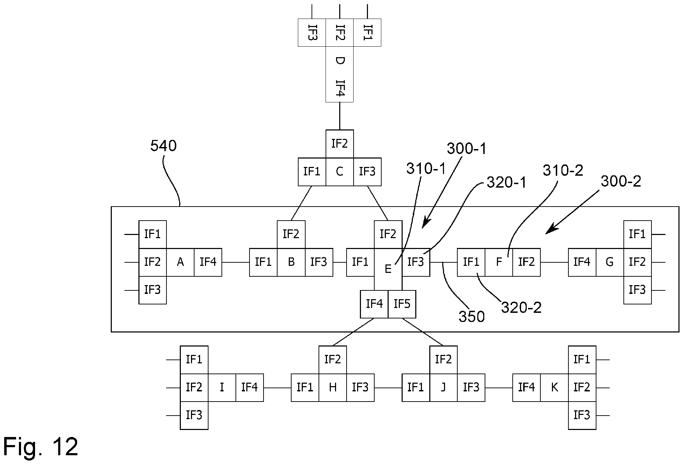

With respect to Fig. 12 to 16, an example of a fault event processing will be described and explained in more detail. The event processing is at the heart of the root cause analysis. The necessary steps are explained using a simplified network infrastructure 450, a model of which is shown in Fig. 12 after the network being translated into the model. For simplicity only, Fig. 12 shows only the network infrastructure on the IP-network level only.

In order to convert the IP-based network infrastructure into the network level model as shown in Fig. 12, it may be advisable, if not necessary to have a complete network infrastructure inventory and network element models for all network elements 300 used.

The model shown in Fig. 12 comprises 11 network elements 300, of which the network elements 300-1, also referred to as network element "E", and 300-2, also referred to as network element "F" are exemplarily denoted by reference numerals. The network elements 300 each comprise core components 310 - denoted as "E" and "F", respectively - and interface components 320. Of the interface components 320 the interface components 320-1 of network element 300-1 (IF3 of E) and 320-2 of network element 300-2 (IF1 of F) are denoted by reference signs. The network components 300-1 and 300-2 are both routers 330 and comprised in a chain 540 of the network.

Based on the overview shown in Fig. 12, a complete network level model can be built using the inventory information. Fig. 12 shows a simplified view of the network level model of the chain 540 comprising the network elements
switch A - router B - router E - router F - switch G
at the network level "Ethernet".

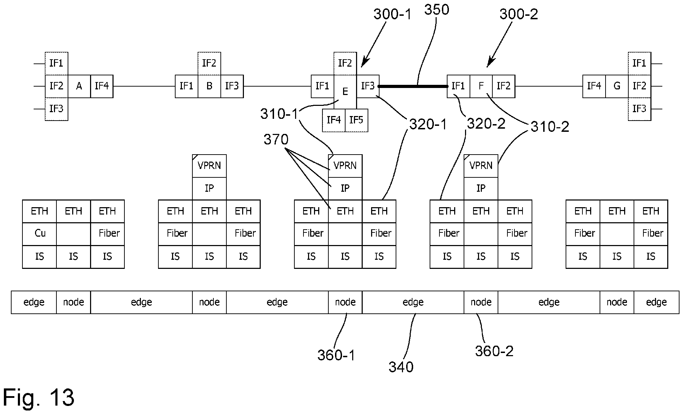

Fig. 13 shows the network level model of the chain 540 with the two routers "E" and "F" (network elements 300-1 and 300-2). As described before, the core components 310-1 and 310-2 ("E" and "F") have been modeled on this level as the node components 360-1 and 360-2, respectively. Moreover, the interface components 320-1 and 320-2 along with the link 350 have become a part of the edge component 340. As outlined before, hierarchy level information 370 have been assigned and included in the respective multidimensional image. The abbreviations "ETH", "IS", "IP", and "VPRN" stand for "Ethernet", "infrastructure", "internet protocol", and "virtual private routing network", respectively. It should be noted that the VPRN hierarchy level is a functional network level, while the other levels are native levels.

A complete network level model encompasses all network elements 300 and all network levels 370. A complete image of all network elements and network levels is beyond the scope of this document. This information is kept in the ECDB 100 or its database 110 and can be handled edge by edge.

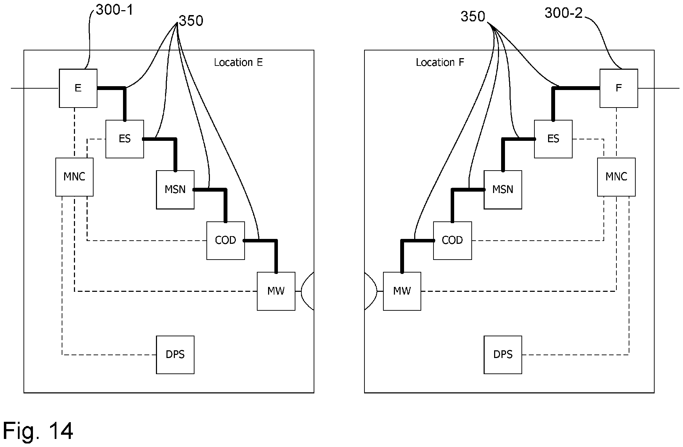

However, a further refinement is provided in Fig. 14 showing all network levels between the routers E and F (network elements 300-1 and 300-2. This part of the network level model is used to show and describe the event handling.

By taking all network levels into consideration, the model of the connection of the two elements 300-1 and 300-2 (routers E and F) becomes more complex. The link 350, shown in Fig. 13 as a single bold line, comprises several sections. At location "E", the router E (network element 300-1) is connected to an Ethernet-port ES of a multiservice node MSN. The multiservice node MSN is connected to a coder COD (encoder and/or decoder) to provide encryption capabilities. The coder COD is connected to microwave equipment MW, which in turn is connected via an antenna to location "F". Correspondingly, at location "F" the link 350 is also divided into a plurality of sections connecting a receiving antenna, microwave equipment MW, a coder COD, a multiservice node MSN, and an Ethernet-port ES, before the link 350 reaches router F (network element 300-2).

While the link 350 and its sections show the data plane, the dashed lines shown in Fig. 14 represent the management plane. At both locations "E" and "F", the respective router E or F, the Ethernet-ports ES, the coders COD, and the microwave equipment MW is coupled to a management network component MNC, which is adapted to manage these elements or components.

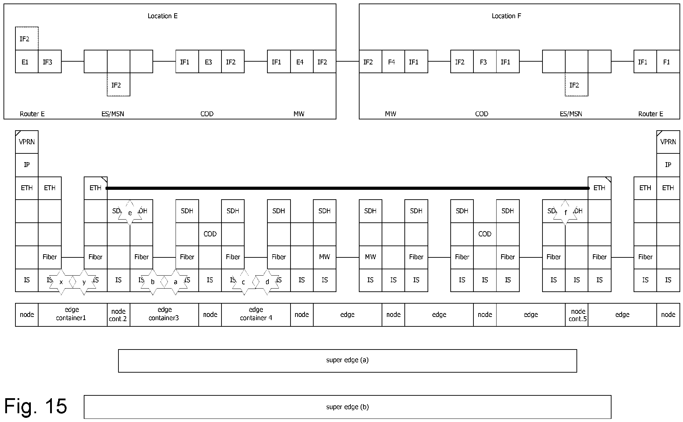

The corresponding excerpt of the network level model or of the corresponding multidimensional image is shown in Fig. 15. It should be noted that the reference signs used before to denote, for instance, the coder and other network components, are used in Fig. 15 also to denote the corresponding hierarchy levels. For instance, "MW" also refers to the corresponding microwave hierarchy level.

However, it should be noted that here one network service is overlaid supported by a non-native network layer. Since the Ethernet protocol is transferred over a SDH-link, the Ethernet hierarchy level is a non-native level, encapsulated in the SDH-protocol. Hence, between the two Ethernet switches ES in the multiservice node MSN a non-native layer is used. The other network services are not shown as they terminate outside of the sector shown.

In order to ease the root cause location process, two further containers comprising several network components have been introduced. Here, two super edges (a) and (b) are introduced for different reasons. Super edge (a) corresponds to the (SDH) link between the two multiservice nodes MSN and is the container for all fault events that may occur on that link. Super edge (b) corresponds to the (Ethernet) link between the routers "E" and "F". This link is realized as a network service and no specific handling is required. The root cause location process is independent of network services and the relation between root cause and network services is established after the analysis.

In an embodiment, the imager 170 creating the multidimensional image and the database may be adapted such that the group of containers further comprises a super edge component, as shown in Fig. 15. The imager 170 may then be adapted to establish whether a group of directly linked physical network elements 300 supports a common link criterion. The imager 170 may then be adapted to assign a plurality of node components 360 and edge components 340 of the physical network elements 300 of the group of directly linked physical network elements to a super edge container, when the criterion is fulfilled. The common link criterion may comprise a use of a common connection-oriented protocol, a common logic assignment, a common functional assignment (e.g. a Virtual Private Network (VPN) or a Virtual Private Routed Network (VPRN)), and a common technology. As will be shown below, the evaluator 130 may be adapted to base the evaluation of a plurality of assigned fault event signals assigned to a first and a second container on the second container, when the physical network elements comprised in the first container are also comprised in the second container. This, however, can be done even in the case when no super edge container is defined.

Fig. 15 also shows 8 stars denoted by a, b, c, d, e, f, x, and y indicating fault events in the respective image elements and the assigned hierarchy levels. Based on these fault elements, the root cause analysis process will now be described in more detail.

The root cause analysis process, as outlined here, comprises five steps. However, in other embodiments it may comprise more or less steps. Also the order of the steps described here, is merely for illustrative purposes, unless explicitly or implicitly stated otherwise.

First an incoming fault event signal is enriched to comprise all necessary information for the further process. This, however, is an optional step. Then, the incoming fault events are allocated to the proper location within the network level model or the multidimensional image (including the hierarchy level). They are assigned to the appropriate container. Moreover, an assessment of the new situation created by the new event(s) may eventually be carried out. The root cause evaluation may then be updated.

In other words, in an embodiment, the evaluator 130 may be adapted to evaluate the assigned fault event signals intermittently, for instance, after a predetermined, programmable or adjustable refresh time has elapsed, a control signal indicative of an evaluation command is received by the evaluator, an interrupt signal is received by the evaluator or another predetermined or adjustable condition is fulfilled.

In the first step, all incoming fault events are processed to have a common format and content. Whenever possible the following information may be of help in the evaluation process: location, network element (ideally to be uniquely identified within the location), network element type (to classify the network element in predefined categories), port and module information (if applicable; should be sufficient to locate the event source on the physical components), network level (may be derivable from the network element model), event reason (vendor specific information with a pointer to the vendor neutral text information for display), event classification (probability information; an event may be a potential root cause ("prc") or a consequential fault event ("con")).

However, in other embodiments, other pieces of information might be included or enriched.

As indicated above, a sequence of events based on a failure is required to describe the root cause analysis further. In Fig. 15 are all events described that are triggered when the SFP (a) in coder E3 adjacent to MSN E2 fails. A number of events will be received by the apparatus according to an embodiment in undefined order. The pieces of information given here reflect, the location, the network element, the network element type, the hierarchy or network level, the fault event reason, and the probability information ("prc" or "con"):
a: location E, network element E3, COD, network level: infrastructure, SFP fails, prc
b: location E, network element E2, MSN, network level: infrastructure, SFP no signal, con
c: location E, network element E3, COD, network level: infrastructure, SFP forced shut down, con
d: location E, network element E4, MW, network level: infrastructure, SFP no signal, con
e: location E, network element E2, MSN, network level: SDH, link down, con
f: location F, network element F2, MSN, network level: SDH, link down, con

At the same time another sequence of events is triggered by a fault in the ES of MSN E2. The same information are given, as above.
x: location E, network element E1, router, network level: infrastructure, SFP no signal, con
y: location E, network element E2, MSN, network level: infrastructure, ES failed, prc

In other words, the letters used as reference signs in Fig. 15 for the fault events indicate the sequence of events. However, due to the transport to the apparatus 100, the receiving order may be different.

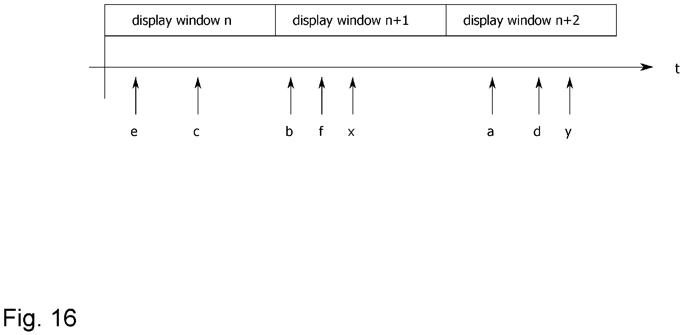

Fig. 16 shows an exemplary receiving order of the above-mentioned fault events. In other words, Fig. 16 indicates the timely sequence of fault event signals received. The apparatus 100 operates intermittently. After a predetermined time, indicated in Fig. 16 as "display window n", "display window n+1", and "display window n+2", the evaluation is repeated based on all received fault event signals. Hence, the evaluator 130 is adapted to evaluate the assigned fault event signals intermittently, for instance, after a predetermined, programmable or adjustable refresh time has elapsed, a control signal indicative of an evaluation command is received by the evaluator, an interrupt signal is received by the evaluator or another predetermined or adjustable condition is fulfilled.

As the IFM 460 or the apparatus 100 receives the fault event signals in no defined order, any permutation of events is possible. Therefore, any order may be chosen as an example. In Fig. 16, during time window n, the fault event signals indicating fault events e and c are received. In display windows n+1 the fault event signals indicating fault events b, f, and x, and in display window n+2 fault event signals indicating fault events a, d, and y are received.

A result of the analysis process is updated during or after each display window. Events received during a display window will be processed and the result will be displayed at the end of the window.

The fault event reason of event e indicates the node in the network element model and is therefore allocated to network level SDH, node of network element E2, location E, container 2. Container 2 is connected to container 10. The event is considered consequential and is therefore with a high probability not the root cause. It is possible to predict a similar event at network element F2 in location F.

The next event received by the embodiment is event c. The event reason indicates the edge in the network element model and is therefore allocated to network level infrastructure, edge of network element E3, location E, container 4. Container 4 is also connected to container 10. The event is consequential and is therefore probably not the root cause.

Display window n closes and an assessment of the situation is necessary. Both events are allocated via their first or primary containers 2 and 4 to secondary or second container 10. Both are declared as consequential.

Event c is allocated to network level infrastructure which is lower than fault event e allocated to network level SDH. Therefore event c is closer to the root case. The information provided to the operator might be, giving the container as the ID-number:
"ID=10: Link between network elements E2 and F2 impaired, infrastructure component
   likely root cause, root cause analysis in progress."

The affected network services are all network services that have the affected link in common. Those network services may be reported to the Service Management.

In the next display window n+1, events b, f, and x are received and processed.

The fault event reason of event b indicates the edge in the network element model and is therefore allocated to network level infrastructure, edge of network element E2, location E, container 3. Container 3 is also connected to container 10. The event is consequential and is therefore probably not the root cause.

The event reason of event f indicates the node in the network element model and is therefore allocated to network level SDH, node of network element F2, location F, container 5. Container 5 is connected to container 10. The event is consequential and is therefore not the root cause. This event is the counterpart of event e.

The event reason of event x indicates the edge in the network element model and is therefore allocated to network level infrastructure, edge of network element E1, location E, container 1. The event is consequential and is therefore not the root cause.

Display window n+1 closes and an assessment of the situation is necessary. Events b and f are allocated via their primary container 3 and 5 to container 10 and both are declared as consequential.

Both events b and f are allocated to network level infrastructure. Event c is also allocated to the network level infrastructure. All events are declared as consequential. Therefore no new insights are available and the information provided to the operator does not change:
"ID=10: Link between network elements E2 and F2 impaired, infrastructure component
   likely root cause, root cause analysis in progress."

Event x is not related to events b, c, e, and f as they belong to a different containers. A second information to the operator is required and could be:
"ID=1: Link between network elements E1 and E2 impaired, infrastructure component
   likely root cause, root cause analysis in progress."

In the next display window n+2 events b, f and x are received and processed.

The event reason of event a indicates the edge in the network element model and is therefore allocated to network level infrastructure, edge of network element E3, location E, container 3. Container 3 is also connected to container 10. The event is marked as potential the root cause.

The event reason of event d indicates the edge in the network element model and is therefore allocated to network level infrastructure, edge of network element E4, location E, container 4. Container 4 is also connected to container 10. The event is consequential and is therefore not the root cause.

The event reason of event y indicates the edge in the network element model and is therefore allocated to network level infrastructure, edge of network element E2, location E, container 1. The event is marked as potential the root cause.

Display window n+2 closes and an assessment of the situation is necessary. Event a and d are allocated via their primary container 3 and 4 to container 10 and a is declared as potential the root cause. Therefore, a potential root cause is identified and the information provided to the operator need to be updated:
"ID=10: Link between network elements E2 and F2 impaired, SFP in E3 failed."

Event y is also not related to events a to f but belongs to container 1 and is declared as potential root cause. Therefore a potential root cause is identified and the information provided to the operator need to be updated:
"ID=1: Link between network elements E1 and E2 impaired, ES in E2 failed."

However, an apparatus 100 according to an embodiment may naturally be implemented in an integrated fault management (IFM) system as well. Furthermore, an apparatus 100 may be adapted such that the multidimensional image is indicative of at least one of a data plane, a control plane, and a management plane of the communication or information carrying network. The apparatus 100 may therefore, operate on any combination of the planes simultaneously, sequentially or in a combined way.

A solution based on an embodiment may allow an integrated root cause analysis in a multivendor and multiservice environment covering any number of network levels. The analysis result is as accurate as the network element model allows and is independent of the particular network and network element knowledge of the tool integrators. Besides providing information for the incident management, where and what is the fault, affected network services may be identified and can be forwarded to the service management for further handling.

The methodology has its unique value in itself as it allows the analysis of an existing network infrastructure. Based on the result, existing rule files may be amended to provide more coverage of fault situations.

The solution may - in principle - provide immediate results with each fault event added. When a fault event arrives, it can be directly associated with the proper location in the network level model (multidimensional image). By placing it, it will reveal immediately whether additional information is added. A duplicate event will not provide new insights - except that the cause still exists. An event from a lower network level matching the potential root cause span (edge or super edge) indicates that the received event is closer to the root cause.

Embodiment may work in any multiservice network infrastructure with any number of network levels. This may particularly be interesting, when information from a lower network level (e.g. a network service) need to be propagated to a higher network level to allow an integrated root cause analysis. Embodiments may further provide a root cause as accurate as the network element model. The network element model is independent of a particular network. Network element models can be provided by network element specialist and do not rely on the integrators knowledge of the network elements.

Embodiments may also avoid customized rule files. The rules applied in the network level model (data and management plane) are deterministic and independent of the network level.

Embodiments may also be able to identify affected network services. The network level model has a view on the network services. Events directly related to network services can be related to identified root causes or vice-versa.

An embodiment may also simplify the fault handling in a multivendor environment. Any vendor is more or less free to decide what information is provided in an event message. This leads to the situation that the same failure will result in different event information by network elements from different vendors. The network element models allow the decoupling of vendor specific acronyms or text to a generic text for display.

Embodiments may rely on an inventory database. The interconnections of the network elements can be discovered in a pure IP-based network infrastructure. This is not necessarily possible in a multivendor or multiservice environment. In order to relate the different network elements to each other, an inventory database may be advisable to implement.

The following list provides some indications in which applications an embodiment may be used. An embodiment may be used in any product that offers a more accurate root cause analysis. Products in current use may have to employ a network level model. Except for a pure IP-based network infrastructure an inventory system may be advantageously used. Network services affected by a fault event may be more easily identifiable. A key element might be the network element model and the related event lists. Most likely, this information would be retrieved from the equipment manufactures. An embodiment may allow a step by step analysis of the event analysis.

Embodiments cover a broad range of possible implementations. Embodiments may provide a deterministic rather than a random approach for the root cause analysis. Therefore, a deterministic model is employed.

Embodiments of the aforementioned apparatuses may comprise a signal processor, respectively, executing a computer program having a program code for performing or supporting embodiments of the above described method when the computer program is executed on said processor. Hence, embodiments may provide a computer program having a program code for performing one of the above described methods when the computer program is executed on a computer or processor. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.
To summarize, embodiments of the present invention may improve a correlation of faults in an information carrying network due to employing the multidimensional image of the information carrying network described above. As, for instance, shown in Fig. 1, an embodiment of an apparatus 100 for correlating faults in an information carrying network comprising a plurality of interconnected physical network elements 300 comprises a data database 110 comprising a multidimensional image of the information carrying network and a data processor 120 adapted to receive at least one fault event signal and to assign the at least one fault event signal, based on information comprised in the at least one fault event signal, to a container and a hierarchy level 370 comprised in the multidimensional image. It further comprises an evaluator 130 adapted to evaluate the at least one assigned fault event signal by correlating information on the containers and the hierarchy level 370 of the at least one assigned fault event level signal and to provide an evaluation signal indicative of a possible correlation of the at least one assigned fault event signal based on the evaluation.
The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Functional blocks denoted as "means for ..." (performing a certain function) shall be understood as functional blocks comprising circuitry that is adapted for performing a certain function, respectively. Hence, a "means for" may as well be understood as a "means being adapted or suited for.". A means being adapted for performing a certain function does, hence, not imply that such means necessarily is performing said function(at a given time instant).
Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (100) for correlating faults in an information carrying network comprising a plurality of interconnected physical network elements (300), the apparatus comprising:
a database (110) comprising a multidimensional image of the information carrying network comprising a plurality of interconnected image elements, the group of image elements comprising containers, physical interface components (320) of the physical network elements (300) and physical core components (310) of the physical network elements (300), wherein the group of containers comprises edge components (340) and node components (360),
wherein an edge component (340) is indicative of at least two physical interface components (320) of at least one physical network element (300) and a link (350) between the at least two physical interface components (320); wherein a node component (360) is indicative of at least a physical component directly coupled to a physical interface component (320) of a physical network element (300); and
wherein the multidimensional image further comprises for at least some image elements of the multidimensional image information on hierarchy levels (370) supported by the respective image elements, wherein the physical interface components (320) comprise the hierarchy levels Ethernet (370-1), Fiber / Copper (370-2) and Infrastructure (370-3);
a data processor (120) adapted to receive at least one fault event signal and to assign the at least one fault event signal to a container and a hierarchy level (370) associated with an image element as defined in the multidimensional image of the information carrying network; and
an evaluator (130) adapted to evaluate the at least one assigned fault event signal by correlating information on the container and the hierarchy level (370) of the at least one assigned fault event signal and to provide an evaluation signal indicative of a possible correlation of the at least one assigned fault event signal based on the evaluation.

2. The apparatus (100) according to claim 1, wherein the evaluator (120) is adapted to provide the evaluation signal comprising an information on a possible root cause having triggered the at least one fault event signal.

3. The apparatus (100) according to claim 2, wherein the evaluator (120) is adapted to consider a first assigned fault event signal as less likely to indicate the root cause, when a second assigned fault event signal assigned to the same container with a lower hierarchy level (370) exists.

4. The apparatus (100) according to any of claims 2 or 3, wherein the evaluator (130) is adapted to base the evaluation of a plurality of fault event signals assigned to a first and a second container on the second container, when the physical network elements (300) comprised in the first container are also comprised in the second container.

5. The apparatus (100) according to any of the claims 2 to 4, wherein the database (110) is further adapted to comprise for at least one of the image elements for at least one fault event signal a probability information indicating a probability of indicating a root cause, and wherein the evaluator is further adapted to base the evaluation on the probability information, when available.

6. The apparatus (100) according to claim 5, wherein the probability information assigned to a fault event signal only comprises the alternatives indicating a possible root cause and indicating a consequential fault event.

7. The apparatus (100) according to any of claims 5 or 6, wherein the evaluator (130) is adapted to consider a first assigned fault event signal as less likely to indicate the root cause, when a second assigned fault event signal assigned to the same container with the same hierarchy level, but a probability information indicating a lower probability of indicating a root cause exists.

8. The apparatus (100) according to any of claims 5 to 7, wherein the evaluator (130) is adapted to provide the evaluation signal indicating an assigned fault event signal as the possible root cause irrespective of the assigned probability information, when to neither the container, to which the assigned fault event signal is assigned, nor to an adjacent container of said container a different, further fault event signal with the same or a lower hierarchy level is assigned.

9. The apparatus (100) according to any of claims 5 to 8, wherein the evaluator (130) is adapted to provide the evaluation signal comprising information on assigned fault event signals assigned to one container and being assigned to a common hierarchy level (370) irrespective of the corresponding probability information and suppressing information on assigned fault events with a higher hierarchy level (370) assigned to the one container, when the one container does not comprise an assigned fault event with a lower hierarchy level (370).

10. The apparatus (100) according to any of the preceding claims, wherein the evaluator (130) is adapted to evaluate the assigned fault event signals intermittently, for instance, after a predetermined, programmable or adjustable refresh time has elapsed, a control signal indicative of an evaluation command is received by the evaluator, an interrupt signal is received by the evaluator or another predetermined or adjustable condition is fulfilled.

11. The apparatus (100) according to any of the preceding claims, further comprising an imager (170) adapted to create the multidimensional image of the information carrying network based on a topology of the information carrying network by at least assigning to each physical network element (300) at least one physical core component (310) and at least one physical interface component (320) along with the information on the supported hierarchy levels (370) and by assigning the containers to the physical core components (310), the physical interface components (320) and the links between the physical interface components (320), wherein the imager (170) is further adapted to store the multidimensional image of the information carrying network to the database (110).

12. The apparatus (100) according to claim 11, wherein the imager and the database (110) are further adapted such that the group of containers further comprises a super edge component, wherein the imager (170) is adapted to establish whether a group of directly linked physical network elements (300) supports a common link criterion, and wherein the imager is adapted to assign at least one node component (360) and a plurality of edge components (340) of the physical network elements (300) of the group of directly linked physical network elements to a super edge container, when the criterion is fulfilled.

13. The apparatus (100) according to any of the preceding claims, wherein the apparatus (100) is adapted such that the multidimensional image is indicative of at least one of a data plane, a control plane, and a management plane of the information carrying network.

14. A method for correlating faults in an information carrying network comprising a plurality of interconnected physical network elements (300), the method comprising:
providing (210) a multidimensional image of the information carrying network comprising a plurality of interconnected image elements, the group of image elements comprising containers, physical interface components (320) of the physical network elements (300) and physical core components (310) of the physical network elements (300), wherein the group of containers comprises edge components (340) and node components (360), wherein an edge component (340) is indicative of at least two physical interface components (320) of at least one physical network element (300) and a link (350) between the at least two physical interface components (320); wherein a node component (360) is indicative of at least a physical component directly coupled to a physical interface component (320) of a physical network element (300);
and where in the multidimensional image further comprises for at least some image elements of the multidimensional image information on hierarchy levels (370) supported by the respective image elements, wherein the physical interface components (320) comprise the hierarchy levels Ethernet (370-1), Fiber / Copper (370-2) and Infrastructure (370-3);
receiving (220) at least one fault event signal;
assigning (230) the at least one fault event signal to a container and a hierarchy level (370) associated with an image element as defined in the multidimensional image of the information carrying network;
evaluating (240) the at least one assigned fault event signal by correlating information on the container and the hierarchy level (370) of the at least one assigned fault event signal; and
providing (250) an evaluation signal indicative of a possible correlation of the at least one assigned fault event signal based on the evaluation.

15. A computer program having a program code for performing the method of claim 14, when the computer program is executed on a computer or processor.

## Patentansprüche

1. Vorrichtung (100) zum Korrelieren von Fehlern in einem informationstragenden Netzwerk, umfassend eine Vielzahl von miteinander verbundenen physikalischen Netzwerkelementen (300), wobei die Vorrichtung umfasst:
eine Datenbank (110), umfassend ein mehrdimensionales Bild des informationstragenden Netzwerks, umfassend eine Vielzahl von miteinander verbundenen Bildelementen, wobei die Gruppe von Bildelementen Behälter, physikalische Schnittstellenkomponenten (320) der physikalischen Netzwerkelemente (300) und physikalische Kernkomponenten (310) der physikalischen Netzwerkelemente (300) umfasst, wobei die Gruppe von Behältern Kantenkomponenten (340) und Knotenkomponenten (360) umfasst,
wobei eine Kantenkomponente (340) indikativ ist für mindestens zwei physikalische Schnittstellenkomponenten (320) von mindestens einem physikalischen Netzwerkelement (300) und einer Verbindung (350) zwischen den mindestens zwei physikalischen Schnittstellenkomponenten (320); wobei eine Knotenkomponente (360) indikativ ist für mindestens eine physikalische Komponente, die direkt mit einer physikalischen Schnittstellenkomponente (320) eines physikalischen Netzwerkelements (300) verbunden ist; und
wobei das mehrdimensionale Bild mindestens für einige Bildelemente des mehrdimensionalen Bildes Information über Hierarchieebenen (370) umfasst, die von den entsprechenden Bildelementen unterstützt werden, wobei die physikalischen Schnittstellenkomponenten (320) die Hierarchieebenen Ethernet (370-1), Faser / Kupfer (370-2) und Infrastruktur (370-3) umfassen;
einen Datenprozessor (120), der ausgelegt ist zum Empfangen von mindestens einem Fehlerereignissignal und zum Zuweisen des mindestens einen Fehlerereignissignals zu einem Behälter und einer Hierarchieebene (370), die mit einem Bildelement verbunden ist wie im mehrdimensionalen Bild des informationstragenden Netzwerks definiert ist; und
ein Auswertegerät (130), das ausgelegt ist zum Auswerten des mindestens einen zugewiesenen Fehlerereignissignals durch Korrelieren von Information in dem Behälter und der Hierarchieebene (370) des mindestens einen zugewiesenen Fehlerereignissignals und zum Bereitstellen eines Auswertungssignals, das indikativ ist für eine mögliche Korrelation des mindestens einen zugewiesenen Fehlerereignissignals auf Grundlage der Auswertung.

2. Vorrichtung (100) nach Anspruch 1, wobei das Auswertegerät (120) ausgelegt ist zum Bereitstellen des Auswertungssignals, umfassend eine Information über die mögliche Grundursache, die das mindestens eine Fehlerereignissignal ausgelöst hat.

3. Vorrichtung (100) nach Anspruch 2, wobei das Auswertegerät (120) ausgelegt ist zum Berücksichtigen eines ersten zugewiesenen Fehlerereignissignals als weniger wahrscheinlich zum Anzeigen der Grundursache, wenn ein zweites zugewiesenes Fehlerereignissignal existiert, das demselben Behälter mit einer niedrigeren Hierarchieebene (370) zugewiesen wird.

4. Vorrichtung (100) nach einem beliebigen der Ansprüche 2 oder 3, wobei das Auswertegerät (130) ausgelegt ist zum Basieren der Auswertung einer Vielzahl von Fehlerereignissignalen, die einem ersten und einem zweiten Behälter zugewiesen worden sind, auf den zweiten Behälter, wenn die physikalischen Netzwerkelemente (300), die im ersten Behälter umfasst sind, auch im zweiten Behälter umfasst sind.

5. Vorrichtung (100) nach einem beliebigen der Ansprüche 2 bis 4, wobei die Datenbank (110) weiterhin ausgelegt ist zum Umfassen mindestens eines der Bildelemente für mindestens ein Fehlerereignissignal einer Wahrscheinlichkeitsinformation, die eine Wahrscheinlichkeit anzeigt, eine Grundursache anzuzeigen, und wobei das Auswertegerät weiterhin ausgelegt ist zum Basieren der Auswertung auf die Wahrscheinlichkeitsinformation, falls diese verfügbar ist.

6. Vorrichtung (100) nach Anspruch 5, wobei die Wahrscheinlichkeitsinformation, die einem Fehlerereignissignal zugewiesen ist, nur die Alternativen umfasst, die eine mögliche Grundursache anzeigen und ein Folgefehlerereignis anzeigen.

7. Vorrichtung (100) nach einem beliebigen der Ansprüche 5 oder 6, wobei das Auswertegerät (130) ausgelegt ist zum Berücksichtigen eines ersten zugewiesenen Fehlerereignissignals als weniger wahrscheinlich zur Anzeige der Grundursache, wenn ein zweites zugewiesenes Fehlerereignissignal demselben Behälter mit derselben Hierarchieebene zugewiesen wird, aber eine Wahrscheinlichkeitsinformation existiert, die eine geringere Wahrscheinlichkeit anzeigt, eine Grundursache anzuzeigen.

8. Vorrichtung (100) nach einem beliebigen der Ansprüche 5 bis 7, wobei das Auswertegerät (130) ausgelegt ist zum Bereitstellen des Auswertungssignals, das ein zugewiesenes Fehlerereignissignal als die mögliche Grundursache ungeachtet der zugewiesenen Wahrscheinlichkeitsinformation anzeigt, wenn weder dem Behälter, dem das zugewiesene Fehlerereignissignal zugewiesen ist, noch einem benachbarten Behälter besagten Behälters ein unterschiedliches, weiteres Fehlerereignissignal mit derselben oder einer niedrigeren Hierarchieebene zugewiesen ist.

9. Vorrichtung (100) nach einem beliebigen der Ansprüche 5 bis 8, wobei das Auswertegerät (130) ausgelegt ist zum Bereitstellen des Auswertungssignals, umfassend Information über zugewiesene Fehlerereignissignale, die einem Behälter zugewiesen worden sind und die einer gemeinsamen Hierarchieebene (370) zugewiesen worden sind, ungeachtet der entsprechenden Wahrscheinlichkeitsinformation, und Unterdrücken von Information über zugewiesene Fehlerereignisse mit einer höheren Hierarchieebene (370), die dem einen Behälter zugewiesen sind, wenn der eine Behälter kein zugewiesenes Fehlerereignis mit einer niedrigeren Hierarchieebene (370) umfasst.

10. Vorrichtung (100) nach einem beliebigen der vorhergehenden Ansprüche, wobei das Auswertegerät (130) ausgelegt ist zum periodischen Auswerten der zugewiesenen Fehlerereignissignale, zum Beispiel nachdem eine vorbestimmte, programmierbare oder einstellbare Aktualisierungszeit abgelaufen ist, ein Kontrollsignal, das indikativ ist für einen Auswertebefehl, vom Auswertegerät empfangen wird, ein Unterbrechungssignal vom Auswertegerät empfangen wird oder eine andere vorbestimmte oder einstellbare Bedingung erfüllt wird.

11. Vorrichtung (100) nach einem beliebigen der vorhergehenden Ansprüche, weiterhin umfassend einen Bildgeber (170), der ausgelegt ist zum Erzeugen des mehrdimensionalen Bildes des informationstragenden Netzwerks auf Grundlage einer Topologie des informationstragenden Netzwerks mindestens durch Zuweisen zu jedem physikalischen Netzwerkelement (300) mindestens einer physikalischen Kernkomponente (310) und mindestens einer physikalischen Schnittstellenkomponente (320) zusammen mit der Information über die unterstützten Hierarchieebenen (370) und durch Zuweisen der Behälter zu den physikalischen Kernkomponenten (310), den physikalischen Schnittstellenkomponenten (320) und den Verbindungen zwischen den physikalischen Schnittstellenkomponenten (320), wobei der Bildgeber (170) weiterhin ausgelegt ist zum Speichern des mehrdimensionalen Bildes des informationstragenden Netzwerks in der Datenbank (110).

12. Vorrichtung (100) nach Anspruch 11, wobei der Bildgeber und die Datenbank (110) weiterhin ausgelegt sind, sodass die Gruppe von Behältern weiterhin eine Super-Kantenkomponente umfasst, wobei der Bildgeber (170) ausgelegt ist zum Bestimmen, ob eine Gruppe direkt verbundener physikalischer Netzwerkelemente (300) ein gemeinsames Verbindungskriterium unterstützt, und wobei der Bildgeber ausgelegt ist zum Zuweisen von mindestens einer Knotenkomponente (360) und einer Vielzahl von Kantenkomponenten (340) der physikalischen Netzwerkelemente (300) der Gruppe direkt verbundener physikalischer Netzwerkelemente zu einem Super-Kantenbehälter, wenn das Kriterium erfüllt ist.

13. Vorrichtung (100) nach einem beliebigen der vorhergehenden Ansprüche, wobei die Vorrichtung (100) ausgelegt ist, sodass das mehrdimensionale Bild indikativ ist für mindestens eine Datenebene, Kontrollebene oder Verwaltungsebene des informationstragenden Netzwerks.

14. Verfahren zum Korrelieren von Fehlern in einem informationstragenden Netzwerk, umfassend eine Vielzahl von miteinander verbundenen physikalischen Netzwerkelementen (300), wobei das Verfahren umfasst:
Bereitstellen (210) eines mehrdimensionalen Bildes des informationstragenden Netzwerks, umfassend eine Vielzahl von miteinander verbundenen Bildelementen, wobei die Gruppe von Bildelementen Behälter, physikalische Schnittstellenkomponenten (320) der physikalischen Netzwerkelemente (300) und physikalische Kernkomponenten (310) der physikalischen Netzwerkelemente (300) umfasst, wobei die Gruppe von Behältern Kantenkomponenten (340) und Knotenkomponenten (360) umfasst, wobei eine Kantenkomponente (340) indikativ ist für mindestens zwei physikalische Schnittstellenkomponenten (320) von mindestens einem physikalischen Netzwerkelement (300) und eine Verbindung (350) zwischen den mindestens zwei physikalischen Schnittstellenkomponenten (320); wobei eine Knotenkomponente (360) indikativ ist für mindestens eine physikalische Komponente, die direkt mit einer physikalischen Schnittstellenkomponente (320) eines physikalischen Netzwerkelements (300) verbunden ist;
und wobei das mehrdimensionale Bild mindestens für einige Bildelemente des mehrdimensionalen Bildes Information über Hierarchieebenen (370) umfasst, die von den entsprechenden Bildelementen unterstützt werden, wobei die physikalischen Schnittstellenkomponenten (320) die Hierarchieebenen Ethernet (370-1), Faser / Kupfer (370-2) und Infrastruktur (370-3) umfassen;
Empfangen (220) von mindestens einem Fehlerereignissignal;
Zuweisen (230) des mindestens einen Fehlerereignissignals zu einem Behälter und einer Hierarchieebene (370), die mit einem Bildelement verbunden ist wie im mehrdimensionalen Bild des informationstragenden Netzwerks definiert ist;
Auswerten (240) des mindestens einen zugewiesenen Fehlerereignissignals durch Korrelieren der Information im Behälter und der Hierarchieebene (370) des mindestens einen zugewiesenen Fehlerereignissignals; und
Bereitstellen (250) eines Auswertungssignals, das indikativ ist für eine mögliche Korrelation des mindestens einen zugewiesenen Fehlerereignissignals auf Grundlage der Auswertung.

15. Computerprogramm mit einem Programmcode zum Durchführen des Verfahrens nach Anspruch 14, wenn das Computerprogramm auf einem Computer oder Prozessor ausgeführt wird.

## Revendications

1. Appareil (100) pour mettre en corrélation des défauts dans un réseau transportant des informations comprenant une pluralité d'éléments de réseau physiques (300) interconnectés, l'appareil comprenant :
une base de données (110) comprenant une image multidimensionnelle du réseau transportant des informations comprenant une pluralité d'éléments d'image interconnectés, le groupe d'éléments d'image comprenant des conteneurs, des composants d'interface physique (320) des éléments de réseau physiques (300) et des composants de coeur physique (310) des éléments de réseau physiques (300), dans lequel le groupe de conteneurs comprend des composants d'extrémité (340) et des composants de noeud (360),
dans lequel un composant d'extrémité (340) indique au moins deux composants d'interface physique (320) d'au moins un élément de réseau physique (300) et une liaison (350) entre les au moins deux composants d'interface physique (320) ; dans lequel un composant de noeud (360) indique au moins un composant physique directement couplé à un composant d'interface physique (320) d'un élément de réseau physique (300) ; et
dans lequel l'image multidimensionnelle comprend en outre, pour au moins certains éléments d'image de l'image multidimensionnelle, des informations sur les niveaux hiérarchiques (370) pris en charge par les éléments d'image respectifs, dans lequel les composants d'interface physique (320) comprennent les niveaux hiérarchiques Ethernet (370-1), Fibre/Cuivre (370-2) et Infrastructure (370-3) ;
un processeur de données (120) adapté pour recevoir au moins un signal d'événement de défaut et pour attribuer l'au moins un signal d'événement de défaut à un conteneur et à un niveau hiérarchique (370) associé à un élément d'image comme cela est défini dans l'image multidimensionnelle du réseau transportant des informations ; et
un évaluateur (130) adapté pour évaluer l'au moins un signal d'événement de défaut attribué en mettant en corrélation des informations sur le conteneur et le niveau hiérarchique (370) de l'au moins un signal d'événement de défaut attribué et pour fournir un signal d'évaluation indiquant une corrélation possible de l'au moins un signal d'événement de défaut attribué sur la base de l'évaluation.

2. Appareil (100) selon la revendication 1, dans lequel l'évaluateur (120) est adapté pour fournir le signal d'évaluation comprenant une information sur une cause racine possible ayant déclenché l'au moins un signal d'événement de défaut.

3. Appareil (100) selon la revendication 2, dans lequel l'évaluateur (120) est adapté pour considérer un premier signal d'événement de défaut attribué comme moins susceptible d'indiquer la cause racine, lorsqu'un deuxième signal d'événement de défaut attribué attribué au même conteneur ayant un niveau hiérarchique (370) inférieur existe.

4. Appareil (100) selon l'une quelconque des revendications 2 et 3, dans lequel l'évaluateur (130) est adapté pour baser l'évaluation d'une pluralité de signaux d'événement de défaut attribués à un premier et à un deuxième conteneurs sur le deuxième conteneur, lorsque les éléments de réseau physiques (300) compris dans le premier conteneur sont également compris dans le deuxième conteneur.

5. Appareil (100) selon l'une quelconque des revendications 2 à 4, dans lequel la base de données (110) est en outre adaptée pour comprendre pour au moins un des éléments d'image pour au moins un signal d'événement de défaut une information de probabilité indiquant une probabilité d'indication d'une cause racine, et dans lequel l'évaluateur est en outre adapté pour baser l'évaluation sur l'information de probabilité, le cas échéant.

6. Appareil (100) selon la revendication 5, dans lequel l'information de probabilité attribuée à un signal d'événement de défaut ne comprend que les alternatives indiquant une cause racine possible et indiquant un événement de défaut consécutif.

7. Appareil (100) selon l'une quelconque des revendications 5 et 6, dans lequel l'évaluateur (130) est adapté pour considérer un premier signal d'événement de défaut attribué comme moins susceptible d'indiquer la cause racine, lorsqu'un deuxième signal d'événement de défaut attribué attribué au même conteneur ayant le même niveau hiérarchique, mais une information de probabilité indiquant une probabilité inférieure d'indication d'une cause racine, existe.

8. Appareil (100) selon l'une quelconque des revendications 5 à 7, dans lequel l'évaluateur (130) est adapté pour fournir le signal d'évaluation indiquant un signal d'événement de défaut attribué comme la cause racine possible indépendamment de l'information de probabilité attribuée, lorsqu'un signal d'événement de défaut supplémentaire différent, ayant le même niveau hiérarchique ou un niveau hiérarchique inférieur, n'est attribué ni au conteneur, auquel le signal d'événement de défaut attribué est attribué, ni à un conteneur adjacent dudit conteneur.

9. Appareil (100) selon l'une quelconque des revendications 5 à 8, dans lequel l'évaluateur (130) est adapté pour fournir le signal d'évaluation comprenant des informations sur des signaux d'événement de défaut attribués attribués à un conteneur et étant attribués à un niveau hiérarchique (370) commun indépendamment de l'information de probabilité correspondante et des informations de suppression sur des événements de défaut attribués ayant un niveau hiérarchique (370) supérieur attribués au conteneur, lorsque le conteneur ne comprend pas un événement de défaut attribué ayant un niveau hiérarchique (370) inférieur.

10. Appareil (100) selon l'une quelconque des revendications précédentes, dans lequel l'évaluateur (130) est adapté pour évaluer par intermittence les signaux d'événement de défaut attribués, par exemple, après qu'un temps de rafraîchissement prédéterminé, programmable ou ajustable s'est écoulé, un signal de commande indiquant qu'une commande d'évaluation est reçue par l'évaluateur, qu'un signal d'interruption est reçu par l'évaluateur ou qu'une autre condition prédéterminée ou ajustable est remplie.

11. Appareil (100) selon l'une quelconque des revendications précédentes, comprenant en outre un imageur (170) adapté pour créer l'image multidimensionnelle du réseau transportant des informations sur la base d'une topologie du réseau transportant des informations en attribuant au moins à chaque élément de réseau physique (300) au moins un composant de coeur physique (310) et au moins un composant d'interface physique (320) avec les informations sur les niveaux hiérarchiques (370) pris en charge et en attribuant les conteneurs aux composants de coeur physique (310), aux composants d'interface physique (320) et aux liaisons entre les composants d'interface physique (320), dans lequel l'imageur (170) est en outre adapté pour stocker l'image multidimensionnelle du réseau transportant des informations dans la base de données (110).

12. Appareil (100) selon la revendication 11, dans lequel l'imageur et la base de données (110) sont en outre adaptés de sorte que le groupe de conteneurs comprenne en outre un composant de super extrémité, dans lequel l'imageur (170) est adapté pour établir si un groupe d'éléments de réseau physiques (300) directement liés prend en charge un critère de liaison commun, et dans lequel l'imageur est adapté pour attribuer au moins un composant de noeud (360) et une pluralité de composants d'extrémité (340) des éléments de réseau physiques (300) du groupe d'éléments de réseau physiques directement liés à un conteneur de super extrémité, lorsque le critère est rempli.

13. Appareil (100) selon l'une quelconque des revendications précédentes, l'appareil (100) étant adapté de sorte que l'image multidimensionnelle indique au moins un plan parmi un plan de données, un plan de commande et un plan de gestion du réseau transportant des informations.

14. Procédé pour mettre en corrélation des défauts dans un réseau transportant des informations comprenant une pluralité d'éléments de réseau physiques (300) interconnectés, le procédé comprenant les étapes suivantes :
fournir (210) une image multidimensionnelle du réseau transportant des informations comprenant une pluralité d'éléments d'image interconnectés, le groupe d'éléments d'image comprenant des conteneurs, des composants d'interface physique (320) des éléments de réseau physiques (300) et des composants de coeur physique (310) des éléments de réseau physiques (300), dans lequel le groupe de conteneurs comprend des composants d'extrémité (340) et des composants de noeud (360), dans lequel un composant d'extrémité (340) indique au moins deux composants d'interface physique (320) d'au moins un élément de réseau physique (300) et une liaison (350) entre les au moins deux composants d'interface physique (320) ; dans lequel un composant de noeud (360) indique au moins un composant physique directement couplé à un composant d'interface physique (320) d'un élément de réseau physique (300) ;
et dans lequel l'image multidimensionnelle comprend en outre, pour au moins certains éléments d'image de l'image multidimensionnelle, des informations sur les niveaux hiérarchiques (370) pris en charge par les éléments d'image respectifs, dans lequel les composants d'interface physique (320) comprennent les niveaux hiérarchiques Ethernet (370-1), Fibre/Cuivre (370-2) et Infrastructure (370-3) ;
recevoir (220) au moins un signal d'événement de défaut ;
attribuer (230) l'au moins un signal d'événement de défaut à un conteneur et à un niveau hiérarchique (370) associé à un élément d'image tel que défini dans l'image multidimensionnelle du réseau transportant des informations ;
évaluer (240) l'au moins un signal d'événement de défaut attribué en mettant en corrélation des informations sur le conteneur et le niveau hiérarchique (370) de l'au moins un signal d'événement de défaut attribué ; et
fournir (250) un signal d'évaluation indiquant une corrélation possible de l'au moins un signal d'événement de défaut attribué sur la base de l'évaluation.

15. Programme informatique possédant un code de programme pour exécuter le procédé selon la revendication 14, lorsque le programme informatique est exécuté sur un ordinateur ou un processeur.
